# EUROPEAN PATENT APPLICATION

(11) **EP 4 387 206 A1**
(43) Date of publication of application: **19.06.2024**
(21) Application number: 21953058.1
(22) Date of filing: 09.08.2021
(51) Int. Cl.: H04L 69/04

(54) **DATA TRANSMISSION METHOD AND APPARATUS**

(71) Applicant: GUANGDONG OPPO MOBILE TELECOMMUNICATIONS CORP., LTD., Dongguan, Guangdong 523860 (CN)
(72) Inventor: FU, Zhe, Dongguan Guangdong 523860 (CN); LU, Qianxi, Dongguan Guangdong 523860 (CN); LENG, Bingxue, Dongguan Guangdong 523860 (CN)
(74) Representative: Novagraaf Technologies
(86) International application number: PCT/CN2021/111620
(87) International publication number: WO 2023/015420

(57) **Abstract**

Embodiments of the present application provide a data transmission method and apparatus. The method is applied to a first terminal device, and comprises: performing an EHC operation according to EHC configuration information, and generating a first data packet; and sending the first data packet to a second terminal device. By means of the EHC configuration information, an EHC function between the terminal device and the terminal device is achieved, and the resource utilization rate during data transmission between the terminal device and the terminal device is improved.

## Description

### TECHNICAL FIELD

The present disclosure relates to a field of communications, and in particular to a data transmission method and a data transmission apparatus.

### BACKGROUND

A time sensitive network (TSN) is introduced in a 5G industrial Internet of things (IIoT), and a header compression process is required to be performed for TSN service.

In a case of the TSN service being carried by an Ethernet frame, a context between a compression end and a decompression end is established successfully, the compression end may start to transmit a data packet of a compression header. After receiving the data packet of the compression header, the decompression end performs an original header recovery process for the data packet of the compression header based on a context ID and original header information of a stored context ID, so as to achieve an Ethernet Header Compression (EHC) function.

However, in the related art, only an EHC function between a base station and a terminal is supported, and the EHC function is not supported on a sidelink (or SL for short), such that a resource utilization rate during a data transmission between terminals is lower.

### SUMMARY OF THE DISCLOSURE

Embodiments of the present disclosure provide a data transmission method and a data transmission apparatus to implement the EHC function between terminal devices and improve the resource utilization rate during the data transmission between the terminal devices.

In a first aspect, the embodiments of the present disclosure provide a data transmission method. The method is performed by a first terminal device and includes performing an Ethernet Header Compression (EHC) process based on EHC configuration information and generating a first data packet; and transmitting the first data packet to a second terminal device.

In a second aspect, the embodiments of the present disclosure provide a data transmission method. The method is performed by a second terminal device and includes receiving a first data packet from a first terminal device; and performing an EHC reception process for the first data packet based on EHC configuration information and obtaining a second data packet.

In a third aspect, the embodiments of the present disclosure provide a data transmission apparatus. The apparatus includes a processing module and a transceiver module. The processing module is configured to perform an Ethernet Header Compression (EHC) process based on EHC configuration information and generating a first data packet. The transceiver module is configured to transmit the first data packet to a second terminal device.

In a fourth aspect, the embodiments of the present disclosure provide a data transmission apparatus. The apparatus includes a transceiver module and a processing module. The transceiver module is configured to receive a first data packet from a first terminal device. The processing module is configured to perform an EHC reception process for the first data packet based on EHC configuration information and obtain a second data packet.

In a fifth aspect, the embodiments of the present disclosure provide a terminal device. The terminal device includes a transceiver, a processor, and a memory. The memory is configured to store computer-executing instructions. The processor is configured to perform the computer-executing instructions stored in the memory to implement the data transmission method as described in the first aspect above.

In a sixth aspect, the embodiments of the present disclosure provide a terminal device. The terminal device includes a transceiver, a processor, and a memory. The memory is configured to store computer-executing instructions. The processor is configured to perform the computer-executing instructions stored in the memory to implement the data transmission method as described in the second aspect above.

In a seventh aspect, the embodiments of the present disclosure provide a computer-readable storage medium. The computer-readable storage medium stores computer-executing instructions. When implemented by a processor, the computer-executing instructions are configured to cause the data transmission method as described in any one of the first aspect or the second aspect above.

In an eighth aspect, the embodiments of the present disclosure provide a computer program product. The computer program product includes a computer program. When the computer program is executed by a processor, the data transmission method as described in any one of the first aspect or the second aspect above is implemented.

According to the data transmission method and the data transmission apparatus provided in the embodiments of the present disclosure, the first terminal device firstly performs an EHC process based on EHC configuration information to generate a first data packet, and then transmits the first data packet to a second terminal device. The second terminal device performs an EHC reception process for the first data packet based on the EHC configuration information to obtain a second data packet. Through the EHC configuration information, the EHC function between the terminal devices is achieved, and the resource utilization rate during the data transmission between the terminal devices is improved.

### BRIEF DESCRIPTION OF THE DRAWINGS

FIG. 1 is a schematic diagram of an application scenario according to some embodiments of the present disclosure.
FIG. 2 is schematic view of a user plane protocol stack according to some embodiments of the present disclosure.
FIG. 3 is schematic flow chart of an EHC process according to some embodiments of the present disclosure.
FIG. 4 is a schematic view of an EHC function according to some embodiments of the present disclosure.
FIG. 5 is a schematic flow chart of a data transmission method according to some embodiments of the present disclosure.
FIG. 6 is a schematic view of preset EHC configuration information according to some embodiments of the present disclosure.
FIG. 7 is a schematic diagram one of a network device configuring EHC configuration information according to some embodiments of the present disclosure.
FIG. 8 is a schematic diagram two of the network device configuring the EHC configuration information according to some embodiments of the present disclosure.
FIG. 9 is a schematic diagram three of the network device configurating the EHC configuration information according to some embodiments of the present disclosure.
FIG. 10 is a schematic diagram one of a terminal device configuring the EHC configuration information according to some embodiments of the present disclosure.
FIG. 11 is a schematic diagram two of the terminal device configuring the EHC configuration information according to some embodiments of the present disclosure.
FIG. 12 is a schematic diagram three of the terminal device configuring the EHC configuration information according to some embodiments of the present disclosure.
FIG. 13 is a schematic diagram four of the terminal device configuring the EHC configuration information according to some embodiments of the present disclosure.
FIG. 14 is a structural schematic view one of a data transmission apparatus according to some embodiments of the present disclosure.
FIG. 15 is a structural schematic view two of the data transmission apparatus according to some embodiments of the present disclosure.
FIG. 16 is a structural schematic view one of the terminal device according to some embodiments of the present disclosure.
FIG. 17 is a structural schematic diagram two of the terminal device according to some embodiments of the present disclosure.

### DETAILED DESCRIPTION

In order to better understand the technical solution of the present disclosure, relevant concepts and relevant technologies involved in the present disclosure are introduced in the following.

Terminal device: the terminal device may be a device which includes a wireless transceiver function and may cooperate with a network device to provide a communication service for a user. The terminal device may refer to a user equipment (UE), an access terminal, a user unit, a user station, a mobile station, a remote station, a remote terminal, a mobile device, a user terminal, a terminal, a wireless communication device, a user agent, or a user apparatus. For example, the terminal device may be a cellular telephone, a cordless telephone, a Session Initiation Protocol (SIP) telephone, a Wireless Local Loop (WLL) station, a Personal Digital Assistant (PDA), a handheld device having a wireless communication function, a computing device, or other processing devices connected to a wireless modem, an in-vehicle device, a wearable device, a terminal device in a future 5G network or a network after 5G, etc.

Network device: the network device may be a device configured to communicate with the terminal device. For example, the network device may be a base transceiver station (BTS) in a Global System for Mobile Communication (GSM) or Code Division Multiple Access (CDMA) system, or a NodeB (NB) in a Wideband Code Division Multiple Access (WCDMA) system, or an evolutional NodeB (eNB or eNodeB) in a LTE system. Alternatively, the network device may be a relay station, an access point, the in-vehicle device, the wearable device, a network side device in the future 5G or the network after 5G, or a network device in a future evolved Public Land Mobile Network (PLMN), etc.

The network device involved in the embodiments of the present disclosure may also be referred to as a Radio Access Network (RAN) device. The RAN device is connected to the terminal device and configured to receive data of the terminal device and transmit the data to a core network. The RAN device corresponds to different devices in different communication systems, e.g., a base station and a base station controller in a 2G system, a base station and a radio network controller (RNC) in a 3G system, an Evolutional Node B (eNB) in a 4G system, an access network device (such as gNB, a centralized unit (CU), or a Distributed Unit (DU)) in a 5G system, such as New Radio (NR), in the 5G system.

SL: Sidelink, a side link, also referred to as a direct connection link, or the sidelink. A SL communication is different from a normal wireless cellular network communication. In a wireless cellular network, the terminal device communicates with the network device, in which a link between the terminal device and the network device is referred to as an uplink or downlink and an interface is referred to as a Uu interface. In a IOT SL communication, the terminal device directly communicates with another terminal device, the link therebetween is referred to as the SL, and an interface thereof is referred to as a PC5 interface. Any two terminal devices may establish one or more Radio Bearers (RBs) on the SL therebetween. The one or more RBs may be configured to transmit data and control information between two terminal devices, respectively. For a unicast transmission, i.e., a point-to-point transmission, when any two terminal devices communicate with each other via the PC5 interface, the RBS between the two terminal devices include a Data Radio Bearer (DRB for short) configured to transmit user-plane data, and may also include a Signaling Radio Bearer (SRB for short) configured to transmit a control-plane signaling.

RRC: Radio Resource Control.

PDCP: Packet Data Convergence Protocol.

PDU: Protocol Data Unit.

EHC: Ethernet Header Compression. The EHC is a method for reducing an overhead caused by an Ethernet header transmission. The ethernet frame may be transmitted through an ethernet PDU session type. In an Ethernet-based industrial Internet, a size of a payload is less relative to an overall size of the frame. Therefore, the EHC process may increase the size of the payload relative to the overall size of the frame, such that a transmission efficiency may be improved.

Further, it is to be understood that the terms, such as "first", "second", etc., in the description of the present disclosure are used only for a purpose of distinguishing description, and should not be construed to indicate or imply a relative importance, a sequence, or an associated relationship between similar nouns.

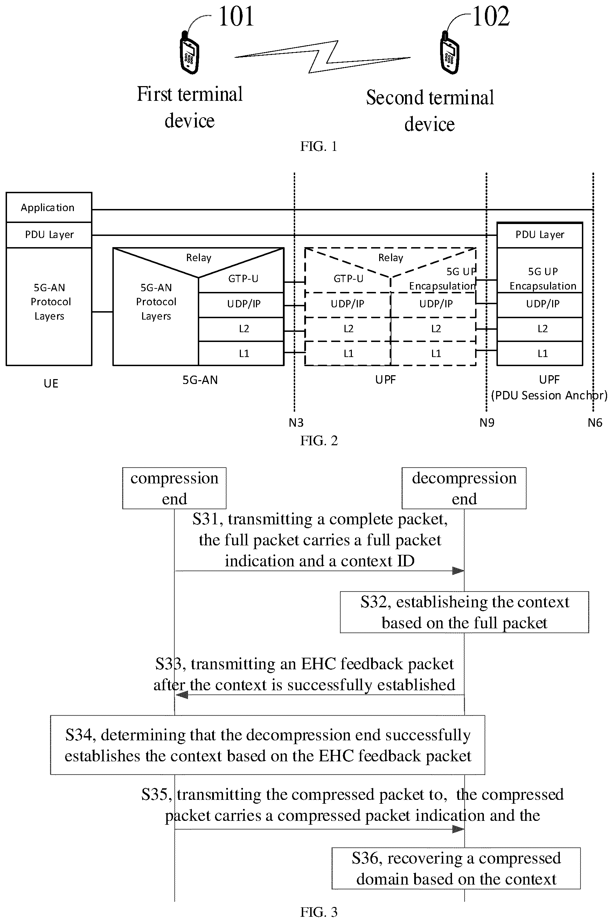

A scenario appliable for a data transmission method in the present disclosure is illustrated in conjunction with FIG. 1 in the following.

FIG. 1 is a schematic diagram of an application scenario according to some embodiments of the present disclosure. As shown in FIG. 1, a first terminal device 101 and a second terminal device 102 are included in the application scenario, and a wireless communication and data transmission may be performed between the first terminal device 101 and the second terminal device 102.

It can be understood that the technical solution of the embodiments of the present disclosure may be applied in a New Radio (NR) communication technology. The NR refers to a new generation of wireless access network technology, and may be applied in a future evolved network, such as a future 5th Generation Mobile Communication (5G) system. The solution in the embodiments of the present disclosure may also be applied to other wireless communication networks such as Wireless Fidelity (WIFI) and Long Term Evolution (LTE). Corresponding names may be substituted with names of corresponding functions in other wireless communication networks.

The network architecture and a service scenario described in the embodiments of the present disclosure are for a purpose of more clearly illustrating the technical solution of the embodiments of the present disclosure, which do not constitute a limitation on the technical solution provided in the embodiments of the present disclosure. A person of ordinary skill in the art may know that the technical solution provided in the embodiments of the present disclosure is also applicable to similar technical problems with the network architecture evolving and a new service scenario emerging.

In 5G IIoT, a service such as a factory automation, a transport industry, an electrical power distribution, etc., is required to be supported to be transmitted in a 5G system. Based on a transmission requirement of latency and reliability, the IIoT introduces a concept of the TSN or TSC, and a header compression process is required to be performed for a TNS service. The TSN service may be carried by the ethernet frame or an IP packet.

The header compression process is only supported to be performed for a data packet in which a PDU session is IP in a current communication system. In a 5G NR system, a type of the PDU session may not only be the IP packet, but also be an ethernet frame type.

FIG. 2 is schematic view of a user plane protocol stack according to some embodiments of the present disclosure. As shown in FIG. 2, the user-plane data is transmitted through a path: the Uu interface-an N3 interface-an N9 interface-an N6 interface. The N6 interface is an interface between the 5G network and an external data network, and is an import and an export of the data at the network side.

In 5G, different types of PDUs are employed to carry different application layers. A currently supported PDU type includes IPv4, IPv6, IPv4v6, the ethernet, and structurelessness, etc. Different PDU types of protocol stacks correspond to their respective protocol stack.

The PDU layer corresponds to a carried PDU session. When the PDU session type is IPv4 or IPv6 or IPv4v6, the PDU session type corresponds to an IPv4 packet or an IPv6 packet. When the PDU session type is the ethernet, the PDU session type corresponds to the ethernet frame.

In order to support a high-precision transmission requirement of the IIoT/TSN service, to ensure the delay and the reliability of the data transmission, and to improve a utilization rate of an air interface resource, the EHC function is implemented in an IIoT project of R16 to achieve the EHC between the UE and the based station.

The EHC function may be implemented between the base station and the UE. An EHC parameter is configured by the base station and transmitted to the UE. After a PDCP entity transmission end transmits a PDCP PDU carrying an establishment context, when receiving an indication of the PDCP PDU being successfully transmitted from a low layer, the PDCP entity transmission end may start to transmit a PDCP PDU carrying a compressed ethernet frame or ethernet message. This PDCP PDU and the PDCP PDU carrying the establishment context which is determined to be successfully transmitted have the same header compressible field, i.e., they belong to the same stream.

An EHC flow is described below in conjunction with FIG. 3.

FIG. 3 is schematic flow chart of an EHC process according to some embodiments of the present disclosure. As shown in FIG. 3, a compression end and a decompression end are shown.

At block S31, the compression end transmits a full packet to the decompression end. The complete packet carries a full packet indication and a context ID.

For an ethernet frame packet stream, an EHC compression end first establishes an EHC context and associates a context ID (CID) with the EHC context. An EHC compression end then transmits a data packet including a full header (FH), i.e., the full packet or a FH packet, to an opposite end. The FH packet includes the CID and original header information.

The full packet indication is a type of packet type indication information. The packet type indication information indicates whether a received data packet is the full packet or a compressed packet. The packet type indication information occupies 1 bit.

At block S32, the decompression end establishes the context based on the full packet.

At block S33, the decompression end transmits an EHC feedback packet to the compression end after the context is successfully established.

At block S34, the compression end determines that the decompression end successfully establishes the context based on the EHC feedback packet.

After receiving the data packet including the FH, the decompression end establishes context information corresponding to the CID based on information in the data packet. When the decompression end has established the context, the decompression end transmits the EHC feedback packet to the compression end to indicate the compression end that the context was successfully established.

At block S35, the compression end transmits the compressed packet to the decompression end, and the compressed packet carries a compressed packet indication and the CID.

After receiving the EHC feedback packet, the compression end starts to transmit a data packet including a compressed header (CH for short), i.e., a compressed packet or a CH packet, to the opposite end. The CH packet includes the CID and compressed header information.

At block S36, the decompression end recovers a compressed domain based on the context.

When receiving the CH packet, the decompression end performs an original header recovery process for the compressed packet based on the CID and stored original header information corresponding to the CID. The decompression end may determine whether a received packet is the full packet or the compressed packet based on the packet type indication information carried in the header.

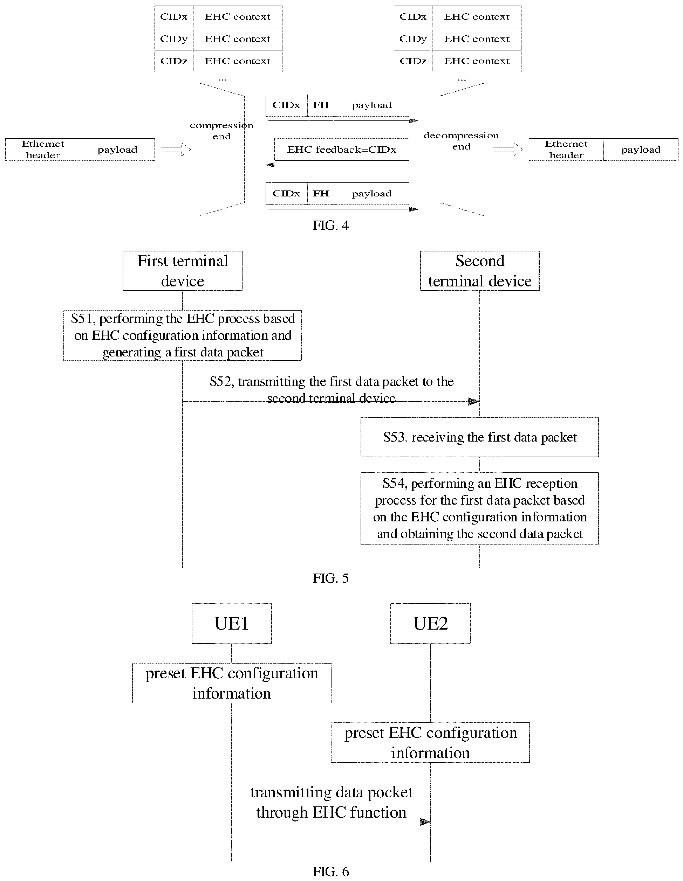

In the above embodiment, a flow of the EHC process is described in conjunction with FIG. 3. An implementation of the EHC function is described below in conjunction with FIG. 4.

FIG. 4 is a schematic view of the EHC function according to some embodiments of the present disclosure. As shown in FIG. 3, the compression end and the decompression end are shown. The compression end is required to transmit the data packet to the decompression end. First, the compression end transmits the full packet to the decompression end, and the full packet includes the CIDx, the FH, and the payload.

After receiving the full packet, the decompression end establishes the EHC context based on the FH and the CIDx. After the context is successfully established, the EHC feedback packet is transmitted to the compression end to indicate that the context is successful established.

The compression end then transmits the compressed packet to the decompression end. The compressed packet includes the CIDx, the CH, and the payload. In an example of FIG. 3, three EHC contexts are established in total and corresponds to three different CIDx, i.e., CIDx, CIDy, and CIDz. The decompression end performs the original header recovery process for the compressed packet based on the CIDx and the stored original header information corresponding to the CIDx. An obtained data packet includes the FH and the payload.

In the related art, only the EHC function between the UE and the base station is supported, while the EHC function is not supported on the SL, which leads to a low resource utilization rate between the UEs. In order to ensure an ethernet frame transmission between the UEs, a data transmission solution is provided in the embodiment of the present disclosure and configured to implement the EHC function between the UEs, such that a resource transmission efficiency in the PC5 interface may be improved. And the solution of the present disclosure is described in the following.

FIG. 5 is a schematic flow chart of the data transmission method according to some embodiments of the present disclosure. As shown in FIG. 5, the method includes operations S51-S54.

At block S51, the method may include the first terminal device performing the EHC process based on EHC configuration information and generating a first data packet.

In the embodiment of the present disclosure, the EHC function between the first terminal device and the second terminal device is achieved. The first terminal device acquires the EHC configuration information and performs the EHC process based on the EHC configuration information. The EHC configuration information may indicate to perform the EHC process, or may indicate not to perform the EHC process, may also indicate to only perform the EHC process for a DRB having a specified ID, or may also indicate to perform the EHC process for a DRB configured with the DRB, etc. The first data packet may be generated in response to performing the EHC process based on the EHC configuration information.

At block S52, the method may include the first terminal device transmitting the first data packet to the second terminal device.

At block S53, the method may include the second terminal device receiving the first data packet from the first terminal device.

After generating the first data packet, the first terminal device transmits the first data packet to the second terminal device, and the second terminal device acquires the first data packet. The first data packet may be a data packet for which the EHC process has been performed, or may also be a data packet for which the EHC process is not performed.

At block S54, the method may include the second terminal device performing an EHC reception process for the first data packet based on the EHC configuration information and obtaining the second data packet.

After obtaining the first data packet, the second terminal device performs the EHC reception process for the first data packet based on the EHC configuration information. The EHC reception process includes, e.g., a high layer delivery, a header detection, and a data decompression or recovery, etc. It may be informed whether the first data packet is the data pocket for which the EHC process has been performed and whether the first data packet includes a header, etc., based on the EHC configuration information, such that a corresponding reception operation is performed.

According to the data transmission method provided in the embodiment of the present disclosure, the first terminal device firstly performs the EHC process based on the EHC configuration information to generate the first data packet, and then transmits the first data packet to the second terminal device. The second terminal device performs the EHC reception process for the first data packet based on the EHC configuration information to obtain the second data packet. Through the EHC configuration information, the EHC function between the terminal devices is achieved, and the resource utilization rate during the data transmission between the terminal devices is improved.

The solution of the present disclosure is described in detail below in conjunction with the accompanying drawings.

The first terminal device and the second terminal device achieve the EHC function between the terminal devices through the EHC configuration information. The EHC configuration information may be preset EHC configuration information, EHC configuration information configured by the network device, or EHC configuration information configured by the terminal device. The three possible implementations are described below, respectively. In the following embodiments, a UE1 indicates the first terminal device, i.e., a transmission end terminal device, and a UE2 indicates the second terminal device, i.e., a reception end terminal device.

FIG. 6 is a schematic view of the preset EHC configuration information according to some embodiments of the present disclosure. As shown in FIG. 6, since the EHC configuration information is preset, the UE1 and the UE2 may directly acquire the preset EHC configuration information. A transmission of the data pocket is then performed between the UE1 and the UE2 based on the preset EHC configuration information.

In an embodiment, the preset EHC configuration information may include at least one of a pre-configuration including the EHC parameter, the EHC parameter, and a DRB configuration.

The pre-configuration including the EHC parameter may be a configuration for an EHC parameter in a transmitting resource pool of the UE, or may be a configuration for an EHC parameter in a receiving resource pool of the UE, or may also be a configuration for an EHC parameter in a resource-shared pool.

When the SL communication is performed between the first terminal device and the second terminal device, resources are generally allocated through resource pools. A resource pool includes one or more resource units. The terminal device may determine a resource used in the SL communication based on the resource pool. Thus, the resource pool is configured before the SL communication. In the embodiment of the present disclosure, the pre-configuration including the EHC parameter includes at least one of the configuration of the EHC parameter of the transmitting resource pool, the configuration of the EHC parameter of the receiving resource pool, and the configuration of the EHC parameter of the resource-shared pool.

The EHC parameter is a parameter required to implement the EHC function. The number of the EHC parameter may be one or more. In the embodiment of the present disclosure, the EHC parameter includes at least one of an ehc CID length, a maximum value of a transmission end EHC CID (max CID EHC tx), a maximum value of a unidirectional EHC CID, and a continue EHC. The four EHC parameters are described, respectively, in the following.

The ehc CID Length indicates a length of an EHC CID, i.e., a length of the CID. In the EHC process, the compression end and the decompression end mark a to-be-compressed original header information as the context. Each context is uniquely identified by a CID. The decompression end identifies and recovers the compressed ethernet frame based on the CID. Two lengths of CIDs are supported in R16, i.e., a 7-bit CID and a 15-bit CID. That is, a value of the ehc CID length may have two options, i.e., 7 bits or 15 bits.

The max CID EHC tx indicates the maximum value of the transmission end EHC CID. That is, a value of the transmission end EHC CID is not allowed to be greater than the max CID EHC tx.

The maximum value of the unidirectional EHC CID indicates the maximum value of the unidirectional EHC CID.

The continue EHC indicates whether to perform a reset process for the EHC parameter or an EHC status in response to the PDCP being reconstructed. A value of the continue EHC may indicate a value of a parameter or a status of an PDCP entity continuing the EHC process when the PDCP is reconstructed, or may also indicate a value of a parameter or a status of the PDCP entity resetting the EHC process when the PDCP is reconstructed.

When the continue EHC indicates the parameter or the status of the PDCP entity continuing the EHC process when the PDCP is reconstructed, it indicates that the PDCP entity continues to perform the EHC process when the PDCP is reconstructed. When the continue EHC indicates the parameter or the status of the PDCP entity resetting the EHC process when the PDCP is reconstructed, it indicates the PDCP entity resets the EHC process when the PDCP is reconstructed. The PDCP entity resetting the EHC process indicates processing for the EHC context and relevant parameters involved in a PDCP entity transmission end or reception end resetting the EHC process. For example, the PDCP entity abandons or releases a mapping relationship between the CID and an ethernet header compressible field, and the PDCP entity transmission end retransmits protecting the FH and the CID corresponding to the FH to establish a corresponding relationship between the CID and the ethernet header compressible field, etc.

The data transmission between the UE1 and the UE2 is performed through the PC5 interface. When the data is transmitted from the UE1 to the UE2 and the EHC function is to be implemented between the UE1 and the UE2, the UE1 is required to determine whether a corresponding DRB employes the EHC function. Whether the EHC process is performed for the corresponding DRB may be determined based on the DRB configuration.

The DRB configuration may include at least one of a DRB ID, a DRB transmission type, and a dada-packet type corresponding to a DRB. Whether the EHC process is configured or performed for the corresponding DRB is indicated based on one or more of the DRB ID, the DRB transmission type, and the dada-packet type corresponding to the DRB.

When the DRB configuration includes the DRB ID, whether the EHC process is configured or performed for the corresponding DRB may be indicated based on the DRB ID.

In an embodiment, a DRB having a specific DRB ID is configured with the EHC process. The EHC process is only performed for the DRB having the specified DRB ID, while the EHC process is not performed for a DRB having a non-specific DRB ID. The specific DRB ID may be set based on requirements. For example, the specific DRB ID may be set to be a first ID (e.g., "enable"). When the DRB ID is the first ID, the DRB configuration indicates the EHC process to be performed for a DRB of the first ID. When the DRB ID is not the first ID (e.g., "disable"), the DRB configuration indicates the EHC process not to be performed for a DRB not of the first ID.

In another embodiment, the EHC process may be performed for a DRB corresponding to the DRB ID carried in the DRB configuration, or not be performed for a DRB corresponding to a DRB ID not carried in the DRB configuration. For example, the DRB configuration carries an ID 1 and an ID 2. The EHC process is performed for a DRB corresponding to the ID 1 or the ID 2, and EHC processes are not performed for DRBs other than the DRBs corresponding to the ID 1 and the ID 2.

When the DRB configuration includes the DRB transmission type. Whether the EHC process is configured or performed for the corresponding DRB may be indicated based on the DRB transmission type. The DRB transmission type includes a unicast type and a non-unicast type. Whether it is the unicast type is determined by a high layer indication.

In an embodiment, when the DRB transmission type is the unicast type, the DRB configuration indicates the EHC process to be performed for a DRB of the unicast type. When the DRB transmission type is the non-unicast type, the DRB configuration indicates the EHC process not to be performed for a DRB of the non-unicast type.

In another embodiment, when the DRB transmission type is the unicast type, the EHC process is performed for the corresponding DRB. When the DRB transmission type is the non- unicast type, the EHC process is not performed for the corresponding DRB.

When the DRB configuration includes the dada-packet type corresponding to the DRB, whether the EHC process is configured or performed for the corresponding DRB may be indicated based on the dada-packet type corresponding to the DRB. The dada-packet type corresponding to the DRB is informed through a UE deep detection or the high layer indication.

In an embodiment, when the dada-packet type corresponding to the DRB is the ethernet frame, the DRB configuration indicates a DRB of an ethernet-frame dada-packet type to perform the EHC process. When the dada-packet type corresponding to the DRB is a non-ethernet frame, the DRB configuration indicates a DRB of a non-ethernet frame dada-packet type not to perform the EHC process.

In another embodiment, when the dada-packet type corresponding to the DRB is the ethernet frame, the EHC process is performed for the corresponding DRB. When the dada-packet type corresponding to the DRB is the non-ethernet frame, the EHC process is not performed for the corresponding DRB.

After determining to perform the EHC process, the UE1 may determine the EHC parameter used by the corresponding DRB to perform the EHC process. The UE1 may determine the EHC parameter used by the corresponding DRB in a manner of the high layer indication or pre-definition.

When the EHC parameter do not include the EHC CID length, or the EHC parameter includes a plurality kind of EHC CID lengths, or the EHC configuration information being the preset EHC configuration information, the EHC CID length may be determined in other manners. That is, whether the value of the ehc CID length is 7 or 15 is determined.

For example, whether the value of the ehc CID Length is 7 or 15 may be determined based on the high layer indication.

For example, whether the value of the ehc CID Length is 7 or 15 may be determined based on an ethernet-frame packet type. The ethernet-frame packet type includes two types, i.e., an ethernet II type and an 802.3 type. In a possible indication manner, when the ethernet-frame packet type is the ethernet II type, the value of the ehc CID Length is 7. When the ethernet-frame packet type is the 802.3 type, the value of the ehc CID Length is 15. In another possible indication manner, when the ethernet-frame packet type is the ethernet II type, the value of the ehc CID Length is 15. When the ethernet-frame packet type is the 802.3 type, the value of the ehc CID Length is 7.

For example, whether the value of the ehc CID Length is 7 or 15 may be determined based on a UE implementation or a preset rule.

For example, whether the value of the ehc CID Length is 7 or 15 may be determined based on a CID length of a corresponding DRB configuration. For example, a threshold may be preset. When the CID length of the DRB is greater than the threshold, the value of the ehc CID Length is 7. When the CID length of the DRB is less than or equal to the threshold, the value of the ehc CID Length is 15. Alternatively, When the CID length of the DRB is greater than the threshold, the value of the ehc CID Length is 15. When the CID length of the DRB is less than or equal to the threshold, the value of the ehc CID Length is 7, etc.

In the above embodiment, contents included in the EHC configuration information are described. A process of the first terminal device performing the EHC process based on the EHC configuration information and transmitting the data packet to the second terminal device is described in the following.

The first terminal device performs the EHC process based on the EHC configuration information. The EHC configuration information may indicate which DRB is performed the EHC process and which DRB is not performed the EHC process.

For example, when the EHC configuration information indicates not to perform the EHC process, that is the EHC configuration information indicating all DRBs not to perform the EHC process. In an embodiment, in this case, for all data packets, a UE1 PDCP may directly generate the first data packet without adding the header and transmit the first data packet to the UE2. In this embodiment, the first data packet does not include an EHC header.

For example, when the EHC configuration information indicates not to perform the EHC process, in another embodiment, in this case, for all the data packets, the UE1 PDCP is still required to add header information and generate the first data packet including the EHC header. An added header includes the packet type indication information and the CID, and the CID has a specific value, e.g., 0.

For example, when the EHC configuration information indicates to perform the EHC process, that is the EHC configuration information indicating all DRBs to perform the EHC process. In an embodiment, in this case, for all the data packets, the UE1 PDCP adds the EHC header, generates the first data packet, and transmits the first data packet to the UE2. In this embodiment, the first data packet includes the EHC header.

For example, when the EHC configuration information indicates to perform the EHC process, in another embodiment, in this case, for all the data packets, the UE1 PDCP is required to add the header information to generate the first data packet including the EHC header. The added EHC header includes the packet type indication information and the CID, and the CID has a non-specific value, e.g., a non-zero value.

For example, the EHC configuration information indicates to only perform the EHC process for the DRB having the DRB ID belonging to the first ID, and the EHC processes are not performed for other DRBs. In this case, for all the data packet, the EHC process is only performed for the DRB having a corresponding DRB ID which belongs to the first ID, and the EHC process is not performed for a DRB having a corresponding DRB ID which does not belong to the first ID, or the EHC process is not performed for a DRB having a corresponding DRB ID which is a non-first ID. The first ID may be a specific ID, such as "enable". In this case, the EHC process is performed when the corresponding DRB ID is "enable", and the EHC process is not performed when the corresponding DRB ID is the non-first ID, such as "disable". The number of the first ID may be one or more. For example, when the first ID includes an ID1 and an ID2, for all the data packets, the EHC process is performed only when the corresponding DRB ID is the ID1 or the ID2, and the EHC process is not performed when the corresponding DRB ID is neither the ID1 nor the ID2. Therefore, when the DRB ID corresponding to the first data packet belongs to the first ID, the first packet is the data packet for which the EHC process has been performed. When the DRB ID corresponding to the first data packet does not belong to the first ID, the first data packet is the data packet for which the EHC process is not performed.

In an embodiment, the UE1 PDCP may not add the EHC header for the data pocket of the DRB for which the EHC is not performed. The UE1 PDCP adds the EHC header for the data pocket of the DRB for which the EHC is performed.

In a case where the EHC header is added for the data pocket for which the EHC process is performed and the EHC header is not added for the data pocket for which the EHC process is not performed, when the DRB ID corresponding to the first data pocket belongs to the first ID, the first data pocket includes the EHC header. When the DRB ID corresponding to the first data pocket does not belong to the first ID or the DRB ID corresponding to the first data pocket is the non-first ID, the first data pocket does not include the EHC header.

In another embodiment, EHC headers are added for all the data pockets. For the data pocket of the DRB for which the EHC process is not performed, the UE1 PDCP is still required to add the header information to generate the EHC header including the CID which is the specific value. Added header information includes the packet type indication information and the CID, and the CID has the specific value, e.g., 0. For the data pocket of the DRB for which the EHC process is performed, the UE1 PDCP is required to add the header information to generate the EHC header including the CID which is the non-specific value. The added header information includes the packet type indication information and the CID, and the CID has the non-specific value, e.g., the non-zero value.

In a case where the EHC header having the CID which is the non-specific value is added for the data pocket for which the EHC process is performed and the EHC header having the CID which is the specific value is added for the data pocket for which the EHC process is not performed, when the DRB ID corresponding to the first data pocket belongs to the first ID, the first data pocket includes the EHC header having the CID which is the non-specific value. When the DRB ID corresponding to the first data pocket does not belong to the first ID or the DRB ID corresponding to the first data pocket is the non-first ID, the first data pocket includes the EHC header having the CID which is the specific value.

For example, when the EHC configuration information indicates to only perform the EHC process for the DRB configured with the EHC process, the EHC processes are not performed for other DRBs. In this case, for the all data packets, the EHC process is only performed for the data pocket of the DRB configured with the EHC process, and the EHC process is not performed for a data pocket of a DRB not configured with the EHC process. Therefore, when the DRB corresponding to the first data packet is configured with the EHC process, the first packet is the data packet for which the EHC process has been performed. When the DRB corresponding to the first data packet is not configured with the EHC process, the first data packet is the data packet for which the EHC process is not performed.

In an embodiment, the UE1 PDCP may not add the EHC header for the data pocket of the DRB for which the EHC process is not performed. The UE1 PDCP adds the EHC header for the data pocket of the DRB for which the EHC process is performed.

In a case where the EHC header is added for the data pocket for which the EHC process is performed and the EHC header is not added for the data pocket for which the EHC process is not performed, when the DRB corresponding to the first data pocket is configured with the EHC process, the first data pocket includes the EHC header. When the DRB corresponding to the first data pocket is not configured with the EHC process, the first data pocket does not include the EHC header.

In another embodiment, the EHC headers are added for the all data pockets. For the data pocket of the DRB for which the EHC process is not performed, the UE1 PDCP is still required to add the header information to generate the EHC header including the CID which is the specific value. The added header information includes the packet type indication information and the CID, and the CID has the specific value, e.g., 0. For the data pocket of the DRB for which the EHC process is performed, the UE1 PDCP is required to add the header information to generate the EHC header including the CID which is the non-specific value. The added header information includes the packet type indication information and the CID, and the CID has the non-specific value, e.g., the non-zero value.

In a case where the EHC headers are added for all the data pockets, the CID in the EHC header of the data pocket for which the EHC process is performed is the non-specific value, and the CID in the EHC header of the data pocket for which the EHC process is not performed is the specific value, when the DRB corresponding to the first data pocket is configured with the EHC process, the first data pocket includes the EHC header having the CID which is the non-specific value. When the DRB corresponding to the first data pocket is not configured with the EHC process, the first data pocket includes the EHC header having the CID which is the specific value.

For example, the EHC configuration information indicates to only perform the EHC process for the DRB. In this case, when a bearer is the DRB, the EHC process is performed. When the bearer is not the DRB (e.g., the bearer is the SRB), the EHC process is not performed.

In an embodiment, the UE1 PDCP may not add the EHC header for the packet for which the EHC process is not performed, and add the EHC header for the packet for which the EHC process is performed. When a bearer of the first data pocket is the DRB, the first data pocket includes the EHC header. When the bearer is not the DRB, a pocket of the bearer does not include the EHC header.

In another embodiment, the EHC headers are added to the all pockets. For the pocket for which the EHC process is not performed, the UE1 PDCP is still required to add the header information to generate the EHC header including the CID which is the specific value. The added header information includes the packet type indication information and the CID, and the CID has the specific value, e.g., 0. For the pocket for which the EHC process is performed, the UE1 PDCP is required to add the header information to generate the EHC header including the CID which is the non-specific value, e.g., the non-zero value. When the bearer is the DRB, the first data pocket includes the EHC header including the CID which is the non- specific value. When the bearer is not the DRB, the pocket of the bearer includes the EHC header including the CID which is the specific value.

After performing the EHC process and generating the first data packet based on the EHC configuration information, the UE1 transmits the first data packet to the UE2. The UE2 is required to acquire the first data packet and determines a corresponding reception behavior based on the EHC configuration information. The reception behavior of the UE2 includes at least one of the high layer delivery, the data decompression or recovery, and the header detection.

For any first data packet, regardless of whether the first data packet includes a header, the corresponding reception behavior of the UE2 may include the high layer delivery. When the data pocket received by the UE2 includes the header, the corresponding reception behavior of the UE2 may include the header detection. When the first data pocket is the data pocket for which the EHC process has been performed and the pocket type indication information in the EHC header indicates that the first data pocket is the data pocket of the CH, the corresponding reception behavior of the UE2 may include the data decompression or recovery.

When the UE2 is informed based on the EHC configuration information that the UE1 PDCP does not add the EHC header for the data pocket of the DRB for which the EHC is not performed and the UE1 PDCP adds the EHC header for the data pocket of the DRB for which the EHC is performed, the UE2 determines the data pocket not including the EHC header to be the data pocket for which the EHC is not performed. After acquiring the data pocket, the UE2 directly performs the high layer delivery.

The UE2 determines that the data packet including the EHC header is the data packet for which the EHC has been performed. After acquiring the data packet, the UE2 may perform the header detection and acquire the packet type indication information and the CID in the EHC header. When the packet type indication information indicates that a received data packet is the data packet of the CH, the UE2 may performs the data decompression or recovery based on the CID and the stored original header information corresponding to the CID. The UE2 may also perform a de-header process, deliver to a high layer, and transmit the EHC feedback pocket to the UE1.

Therefore, when the first data packet does not include the EHC header, the EHC reception process of the UE2 includes the high layer delivery. When the first data packet includes the EHC header, the EHC reception process of the UE2 includes at least one of the high layer delivery, the data decompression or recovery, and the header detection.

In a case, the UE2 is informed based on the EHC configuration information that the UE1 PDCP is still required to add the header information for the data pocket of the DRB for which the EHC is not performed. The header information includes the packet type indication information and the CID, and the CID has the specific value, e.g., 0. The UE1 PDCP adds the header information for the data pocket of the DRB for which the EHC is not performed, the header information includes the packet type indication information and the CID, and the CID has the non-specific value, e.g., the non-zero value. The UE2 determines the data pocket of the EHC header including the CID which is the specific value to be the data pocket for which the EHC is not performed. After acquiring the data pocket, the UE2 may perform at least one of the header detection and the high layer delivery. The UE2 may remove the header information for the data pocket for which the EHC is not performed and deliver it to the high layer.

The UE2 determines that the data packet including the EHC header having the CID which is the non-specific value to be the data pocket for which the EHC process has been performed. After acquiring the data packet, the UE2 may perform the header detection and acquire the packet type indication information and the CID in the EHC header. When the packet type indication information indicates that the received data packet is the data packet of the CH, the UE2 may perform the data decompression or recovery based on the CID and the stored original header information corresponding to the CID. The UE2 may also save the CID and remove the header to deliver to the high layer. That is, the UE2 performs at least one of the header detection, the high layer delivery, and the data decompression or recovery. In an embodiment, the UE2 may also transmit the EHC feedback packet to the UE1.

Therefore, when the first data packet includes the EHC header having the CID which is the specific value, the EHC process of the UE2 includes at least one of the high layer delivery and the header detection. When the first data pocket includes the EHC header having the CID which is the non-specific value, the EHC process of the UE2 includes at least one of the high layer delivery, the data decompression or recovery, and the header detection.

In the above embodiment, a solution of the EHC configuration information being acquired in a pre-configuration manner and the UE1 and the UE2 performing the EHC process based on the preset EHC configuration information is described. A solution of the EHC function between the UE1 and the UE2 is implemented through the network device configuring the EHC configuration information.

The EHC configuration information configured by the network device may include at least one of the configuration including the EHC parameter, the EHC parameter, and the DRB configuration.

In the embodiment of the present disclosure, the configuration including the EHC parameter may be the configuration of the EHC parameter for a transmitting resource pool of the UE, the configuration of the EHC parameter for the receiving resource pool of the UE, the configuration of the EHC parameter for the resource-shared pool, or the configuration of the EHC parameter between the first terminal device and the second terminal device.

When the configuration including the EHC parameter includes the configuration of the EHC parameter between the first terminal device and the second terminal device, the configuration of the EHC parameter between the first terminal device and the second terminal device further includes a terminal device ID. The network device indicates the terminal device ID corresponding to the configuration of the EHC parameter between the first terminal device and the second terminal device at the same time. The terminal device ID is configured to indicate a matching relationship between the configuration of the EHC parameter between the first terminal device and the second terminal device and the terminal device.

The EHC parameter is the parameter required to implement the EHC function. The number of the EHC parameter may be one or more. In the embodiment of the present disclosure, the EHC parameter includes at least one of the ehc CID length, the max CID EHC tx, the maximum value of the unidirectional EHC CID, and the continue EHC.

The ehc CID Length is the length of the EHC CID. The max CID EHC tx is the maximum value of the transmission end EHC CID. A description of the EHC parameter may refer to relevant contents of the embodiment illustrated in FIG. 6, which is not repeated herein.

After configuring the EHC configuration information, the network device is required to indicate the EHC configuration information to the UE1 and the UE2.

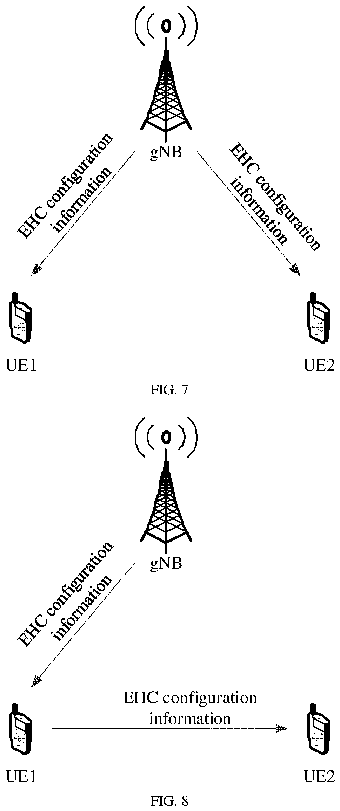

In an embodiment, the EHC configuration information is indicated by the network device to the UE1 and the UE2, respectively. FIG. 7 is a schematic diagram one of the network device configuring the EHC configuration information according to some embodiments of the present disclosure. As shown in FIG. 7, the gNB (i.e., the network device), the UE1 (i.e., the first terminal device), and the UE2 (i.e., the second terminal device) are shown. After configuring the EHC configuration information, the gNB indicates the EHC configuration information to the UE1 and the UE2.

For example, the network device transmits the EHC configuration information to the UE1 and the UE2 through an RRC message (e.g., SL-configDedicated). In this implementation, the UE1 may acquire the RRC message from the network device and then acquire the EHC configuration information based on the RRC message. Similarly, the UE2 may acquire the RRC message from the network device and then acquire the EHC configuration information based on the RRC message.

In addition to the EHC configuration information being indicated to the UE1 and the UE2 by the network device, the EHC configuration information configured by the network device may also be indicated to one of the UE1 and the UE2, and then exchanged by the one of the UE1 and the UE2 to the other one of the UE1 and the UE2.

The network device may indicate the EHC configuration information to any one of UE1 and UE2. For example, when the network device indicates the EHC configuration information to the UE1, the UE1 then exchanges the EHC configuration information to the UE2. The network device may also indicate the EHC configuration information to a transmission end UE. The EHC configuration information is then exchanged by the transmission end UE to a reception end UE. Alternatively, the network device indicates the EHC configuration information to the reception end UE. The EHC configuration information is then exchanged by the reception end UE to the transmission end UE. The network device may also indicate the configuration of the EHC parameter of the transmitting resource pool to the transmission end UE, and indicate the configuration of the EHC parameter of the receiving resource pool to the reception end UE, etc. The following is described in conjunction with the accompanying drawings. In the embodiments described in the following, the UE1 as the transmission end UE and the UE2 as the reception end UE is taken as example for description.

FIG. 8 is a schematic diagram two of the network device configuring the EHC configuration information according to some embodiments of the present disclosure. As shown in FIG. 8, the gNB (i.e., the network device), the UE1 (i.e., the first terminal device), and the UE2 (i.e., the second terminal device) are shown. After the gNB configures the EHC configuration information, the EHC configuration information is indicated by the network device to the UE1 and then exchanged by the UE1 to the UE2.

The network device transmits the EHC configuration information to the UE1. After receiving the EHC configuration information from the network device, the UE1 transmits the EHC configuration information to the UE2.

The UE2 receives the EHC configuration information from the UE1. The EHC configuration information is transmitted by the network device to the UE1. The EHC configuration information includes any one of the configuration of the EHC parameter of the transmitting resource pool, the configuration of the EHC parameter of the receiving resource pool, and both the configuration of the EHC parameter of the transmitting resource pool and the configuration of the EHC parameter of the receiving resource pool.

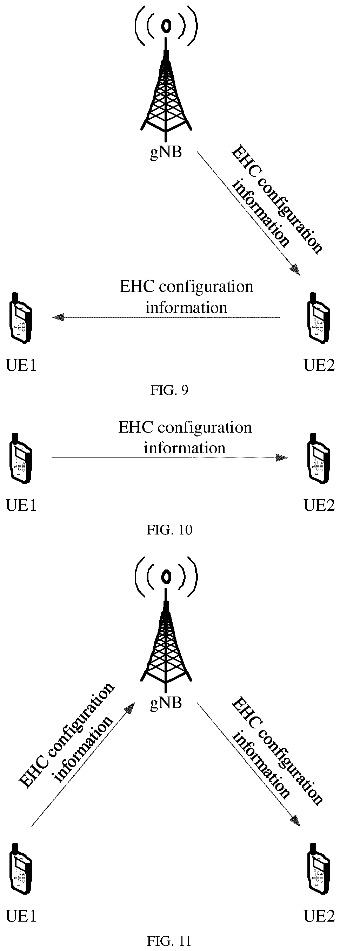

FIG. 9 is a schematic diagram three of the network device configurating the EHC configuration information according to some embodiments of the present disclosure. As shown in FIG. 9, the gNB (i.e., the network device), the UE1 (i.e., the first terminal device), and the UE2 (i.e., the second terminal device) are shown. After the gNB configures the EHC configuration information, the EHC configuration information is indicated by the network device to the UE2 and then exchanged by the UE2 to the UE1.

The network device transmits the EHC configuration information to the UE2. After receiving the EHC configuration information from the network device, the UE2 transmits the EHC configuration information to the UE1. The UE1 receives the EHC configuration information from the UE2. The EHC configuration information is transmitted by the network device to the UE2. The EHC configuration information includes any one of the configuration of the EHC parameter of the transmitting resource pool and both the configuration of the EHC parameter of the transmitting resource pool and the configuration of the EHC parameter of the receiving resource pool.

The EHC configuration information may be the EHC configuration information configured by the terminal device, in addition to the preset EHC configuration information or the EHC configuration information configured by the network device. The EHC configuration information configured by the terminal device may include at least one of the configuration including the EHC parameter, the EHC parameter, and the DRB configuration.

In the embodiment of the present disclosure, the configuration including the EHC parameter may be the configuration of the EHC parameter for the transmitting resource pool of the UE, the configuration of the EHC parameter for the receiving resource pool of the UE, the configuration of the EHC parameter for the resource-shared pool, or the configuration of the EHC parameter between the first terminal device and the second terminal device.

When the configuration including the EHC parameter includes the configuration of the EHC parameter between the first terminal device and the second terminal device, the configuration of the EHC parameter between the first terminal device and the second terminal device further includes the terminal device ID. The terminal device indicates the terminal device ID corresponding to the configuration of the EHC parameter between the first terminal device and the second terminal device at the same time. The terminal device ID is configured to indicate the matching relationship between the configuration of the EHC parameter between the first terminal device and the second terminal device and the terminal device. When the UE1 configures the EHC configuration information, the UE1 indicates the terminal device ID at the same time. When the UE2 configures the EHC configuration information, the UE2 indicates the terminal device ID at the same time.

The EHC parameter is the parameter required to implement the EHC function. The number of the EHC parameter may be one or more. In the embodiment of the present disclosure, the EHC parameter includes at least one of a transmitting EHC parameter of the first terminal device, a receiving EHC parameter of the first terminal device, a transmitting EHC parameter of the second terminal device, and a receiving EHC parameter of the second terminal device. When the UE1 configures the EHC configuration information, the UE1 may determine the transmitting EHC parameter of the UE1, or the UE1 may determine the receiving EHC parameter of the UE1 and the transmitting EHC parameter of the UE2, or the UE1 determines all EHC parameters (the transmitting EHC parameter of the first terminal device, the receiving EHC parameter of the first terminal device, the transmitting EHC parameter of the second terminal device, and the receiving EHC parameter of the second terminal device). When the UE2 configures the EHC configuration information, the UE2 may determine at least one of the transmitting EHC parameter of the first terminal device, the receiving EHC parameter of the first terminal device, the transmitting EHC parameter of the second terminal device, and the receiving EHC parameter of the second terminal device.

In the embodiment of the present disclosure, the EHC parameter includes at least one of the ehc CID length, the max CID EHC tx, the maximum value of the unidirectional EHC CID, and the continue EHC. The ehc CID Length is the length of the EHC CID. The max CID EHC tx is the maximum value of the transmission end EHC CID. The description of the EHC parameter may refer to the relevant contents of the embodiment illustrated in FIG. 6, which is not repeated herein.

After configuring the EHC configuration information, the terminal device may directly indicate the EHC configuration information to an opposite end terminal device, or may also indicate the EHC configuration information to the opposite end terminal device through the network device. The terminal device configuring the EHC configuration information may be the first terminal device, or may also be the second terminal device.

FIG. 10 is a schematic diagram one of the terminal device configuring the EHC configuration information according to some embodiments of the present disclosure. As shown in FIG. 10, the UE1 (i.e., the first terminal device), and the UE2 (i.e., the second terminal device) are shown.

In the example of FIG. 10, the terminal device configuring the EHC configuration information is the first terminal device. After configuring the EHC configuration information, the first terminal device transmits the EHC configuration information to the second terminal device. The second terminal device receives the EHC configuration information from the first terminal device.

FIG. 11 is a schematic diagram two of the terminal device configuring the EHC configuration information according to some embodiments of the present disclosure. As shown in FIG. 11, the gNB (i.e., the network device), the UE1 (i.e., the first terminal device), and the UE2 (i.e., the second terminal device) are shown.

In the example of FIG. 11, the terminal device configuring the EHC configuration information is the first terminal device. After configuring the EHC configuration information, the first terminal device is required to indicate the EHC configuration information to the second terminal device.

Different from the example of FIG. 10 in which the first terminal device directly transmits the EHC configuration information to the second terminal device, in the example of FIG. 11, the EHC configuration information is required to be indicated to the second terminal device through the network device. The first terminal device firstly transmits the EHC configuration information to the network device, and then the network device transmits the EHC configuration information to the second terminal device. The second terminal device receives the EHC configuration information from the network device. The EHC configuration information is transmitted by the first terminal device to the network device.

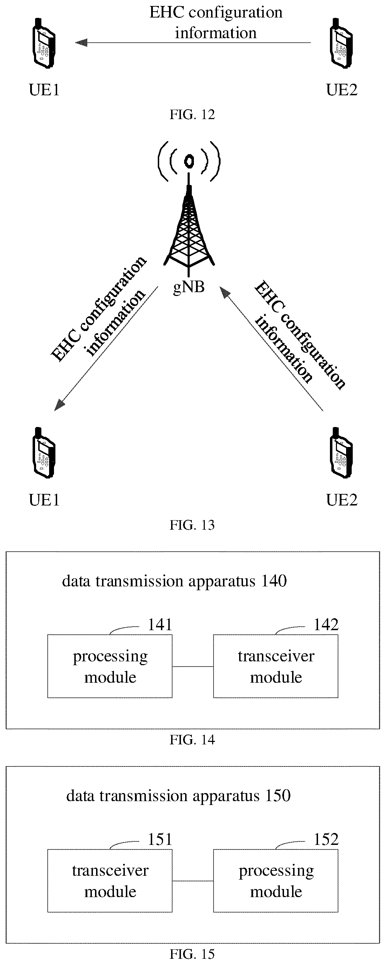

FIG. 12 is a schematic diagram three of the terminal device configuring the EHC configuration information according to some embodiments of the present disclosure. As shown in FIG. 10, the UE1 (i.e., the first terminal device), and the UE2 (i.e., the second terminal device) are shown.

In the example of FIG. 12, the terminal device configuring the EHC configuration information is the second terminal device. After configuring the EHC configuration information, the second terminal device transmits the EHC configuration information to the first terminal device. The first terminal device receives the EHC configuration information from the second terminal device.

FIG. 13 is a schematic diagram four of the terminal device configuring the EHC configuration information according to some embodiments of the present disclosure. As shown in FIG. 13, the gNB (i.e., the network device), the UE1 (i.e., the first terminal device), and the UE2 (i.e., the second terminal device) are shown.

In the example of FIG. 13, the terminal device configuring the EHC configuration information is the second terminal device. After configuring the EHC configuration information, the second terminal device is required to indicate the EHC configuration information to the first terminal device.

Different from the example of FIG. 12 in which the second terminal device directly transmits the EHC configuration information to the first terminal device, in the example of FIG. 13, the EHC configuration information is required to be indicated to the first terminal device through the network device. The second terminal device firstly transmits the EHC configuration information to the network device, and then the network device transmits the EHC configuration information to the first terminal device. The first terminal device receives the EHC configuration information from the network device. The EHC configuration information is transmitted by the second terminal device to the network device.

The data transmission between the UE1 and the UE2 is performed through the PC5 interface. When the data is transmitted from the UE1 to the UE2 and the EHC function is to be implemented between the UE1 and the UE2, the UE1 is required to firstly determine whether the corresponding DRB employes the EHC function. Whether the corresponding DRB performs the EHC process may be determined based on the DRB configuration.

The DRB configuration may include at least one of the DRB ID, the DRB transmission type, and the dada-packet type corresponding to the DRB. Whether the EHC process is configured or performed for the corresponding DRB is indicated based on one or more of the DRB ID, the DRB transmission type, and the dada-packet type corresponding to the DRB.

When the DRB configuration includes the DRB ID, whether the EHC process is configured or performed for the corresponding DRB may be indicated based on the DRB ID.

In an embodiment, the DRB having the specific DRB ID may be configured with the EHC process. The EHC process is only performed for the DRB having the specified DRB ID, while the EHC process is not performed for the DRB having the non-specific DRB ID. The specific DRB ID may be set based on the requirements. For example, the specific DRB ID may be set to be the first ID (e.g., "enable"). When the DRB ID is the first ID, the DRB configuration indicates the EHC process to be performed for the DRB of the first ID. When the DRB ID is not the first ID (e.g., "disable"), the DRB configuration indicates the EHC process not to be performed for the DRB not of the first ID.

In another embodiment, the EHC process may be performed for the DRB corresponding to the DRB ID carried in the DRB configuration, or not be performed for the DRB corresponding to the DRB ID not carried in the DRB configuration. For example, the DRB configuration carries the ID 1 and the ID 2. The EHC process is performed for the DRB corresponding to the ID 1 or the ID 2, and the EHC processes are not performed for the DRBs other than the DRBs corresponding to the ID 1 and the ID 2.

When the DRB configuration includes the DRB transmission type. Whether the EHC process is configured or performed for the corresponding DRB may be indicated based on the DRB transmission type. The DRB transmission type includes the unicast type and the non-unicast type. Whether it is the unicast type is determined by the high layer indication.

In an embodiment, when the DRB transmission type is the unicast type, the DRB configuration indicates the EHC process to be performed for the DRB of the unicast type. When the DRB transmission type is the non-unicast type, the DRB configuration indicates the EHC process not to be performed for the DRB of the non-unicast type.

In another embodiment, when the DRB transmission type is the unicast type, the EHC process is performed for the corresponding DRB. When the DRB transmission type is the non- unicast type, the EHC process is not performed for the corresponding DRB.

When the DRB configuration includes the dada-packet type corresponding to the DRB, whether the EHC process is configured or performed for the corresponding DRB may be indicated based on the dada-packet type corresponding to the DRB. The dada-packet type corresponding to the DRB is informed through the UE deep detection or the high layer indication.

In an embodiment, when the dada-packet type corresponding to the DRB is the ethernet frame, the DRB configuration indicates the EHC process to be performed for the DRB of the ethernet-frame dada-packet type. When the dada-packet type corresponding to the DRB is the non-ethernet frame, the DRB configuration indicates the EHC process not to be performed for the DRB of the non-ethernet frame dada-packet type.

In another embodiment, when the dada-packet type corresponding to the DRB is the ethernet frame, the EHC process is performed for the corresponding DRB. When the dada-packet type corresponding to the DRB is the non-ethernet frame, the EHC process is not performed for the corresponding DRB.

After determining to perform the EHC process, the UE1 may determine the EHC parameter used by the corresponding DRB to perform the EHC process. The UE1 may determine the EHC parameter used by the corresponding DRB in the manner of the high layer indication or the pre-definition.

When the EHC parameter do not include the EHC CID length, or the EHC parameter includes the plurality kind of EHC CID lengths, the EHC CID length may be determined in other manners. That is, whether the value of the ehc CID length is 7 or 15 is determined.

For example, whether the value of the ehc CID Length is 7 or 15 may be determined based on the high layer indication.

For example, whether the value of the ehc CID Length is 7 or 15 may be determined based on the ethernet-frame packet type. The ethernet-frame packet type includes two types, i.e., the ethernet II type and the 802.3 type. In a possible indication manner, when the ethernet-frame packet type is the ethernet II type, the value of the ehc CID Length is 7. When the ethernet-frame packet type is the 802.3 type, the value of the ehc CID Length is 15. In another possible indication manner, when the ethernet-frame packet type is the ethernet II type, the value of the ehc CID Length is 15. When the ethernet-frame packet type is the 802.3 type, the value of the ehc CID Length is 7.

For example, whether the value of the ehc CID Length is 7 or 15 may be determined based on the UE implementation or the preset rule.

For example, whether the value of the ehc CID Length is 7 or 15 may be determined based on the CID length of the corresponding DRB configuration. For example, the threshold may be preset. When the CID length of the DRB configuration is greater than the threshold, the value of the ehc CID Length is 7. When the CID length of the DRB is less than or equal to the threshold, the value of the ehc CID Length is 15. Alternatively, When the CID length of the DRB is greater than the threshold, the value of the ehc CID Length is 15. When the CID length of the DRB is less than or equal to the threshold, the value of the ehc CID Length is 7, etc.

The contents in relation to the EHC configuration information being configured by the network device and the EHC configuration information being configured by the terminal device are described in embodiments illustrated in FIG. 7-FIG. 14. A process of the first terminal device performing the EHC process based on the EHC configuration information and transmitting the data packet to the second terminal device is described in the following.

The first terminal device performs the EHC process based on the EHC configuration information. The EHC configuration information may indicate which DRB is performed the EHC process and which DRB is not performed the EHC process.

For example, when the EHC configuration information indicates not to perform the EHC process, that is the EHC configuration information indicating the all DRBs not to perform the EHC process. In an embodiment, in this case, for the all data packets, the UE1 PDCP may directly generate the first data packet without adding the header and transmit the first data packet to the UE2. In this embodiment, the first data packet does not include the EHC header.

For example, when the EHC configuration information indicates not to perform the EHC process, in another embodiment, in this case, for the all data packets, the UE1 PDCP is still required to add header information and generate the first data packet including the EHC header. The added header includes the packet type indication information and the CID, and the CID has a specific value, e.g., 0.

For example, when the EHC configuration information indicates to perform the EHC process, that is the EHC configuration information indicating the all DRBs to perform the EHC process. In an embodiment, in this case, for the all data packets, the UE1 PDCP adds the EHC header, generates the first data packet, and transmits the first data packet to the UE2. In this embodiment, the first data packet includes the EHC header.

For example, when the EHC configuration information indicates to perform the EHC process, in another embodiment, in this case, for the all data packets, the UE1 PDCP is required to add the header information to generate the first data packet including the EHC header. The added EHC header includes the packet type indication information and the CID, and the CID has the non-specific value, e.g., the non-zero value.

For example, the EHC configuration information indicates to only perform the EHC process for the DRB having the DRB ID belonging to the first ID, and the EHC processes are not performed for other DRBs. In this case, for the all data packet, the EHC process is only performed for the DRB having the corresponding DRB ID which belongs to the first ID, and the EHC process is not performed for the DRB having the corresponding DRB ID which does not belong to the first ID, or the EHC process is not performed for the DRB having the corresponding DRB ID which is the non-first ID. The first ID may be the specific ID, such as "enable". In this case, the EHC process is performed when the corresponding DRB ID is "enable", and the EHC process is not performed when the corresponding DRB ID is the non-first ID, such as "disable". The number of the first ID may be one or more. For example, when the first ID includes the ID1 and the ID2, for the all data packets, the EHC process is performed only when the corresponding DRB ID is the ID1 or the ID2, and the EHC process is not performed when the corresponding DRB ID is neither the ID1 nor the ID2. Therefore, when the DRB ID corresponding to the first data packet belongs to the first ID, the first packet is the data packet for which the EHC process has been performed. When the DRB ID corresponding to the first data packet does not belong to the first ID, the first data packet is the data packet for which the EHC process is not performed.

In an embodiment, the UE1 PDCP may not add the EHC header for the data pocket of the DRB for which the EHC is not performed. The UE1 PDCP adds the EHC header for the data pocket of the DRB for which the EHC is performed.

In the case where the EHC header is added for the data pocket for which the EHC process is performed and the EHC header is not added for the data pocket for which the EHC process is not performed, when the DRB ID corresponding to the first data pocket belongs to the first ID, the first data pocket includes the EHC header. When the DRB ID corresponding to the first data pocket does not belong to the first ID or the DRB ID corresponding to the first data pocket is the non-first ID, the first data pocket does not include the EHC header.

In another embodiment, the EHC headers are added for the all data pockets. For the data pocket of the DRB for which the EHC process is not performed, the UE1 PDCP is still required to add the header information to generate the EHC header including the CID which is the specific value. The added header information includes the packet type indication information and the CID, and the CID has the specific value, e.g., 0. For the data pocket of the DRB for which the EHC process is performed, the UE1 PDCP is required to add the header information to generate the EHC header including the CID which is the non-specific value. The added header information includes the packet type indication information and the CID, and the CID has the non-specific value, e.g., the non-zero value.

In the case where the EHC header having the CID which is the non-specific value is added for the data pocket for which the EHC process is performed and the EHC header having the CID which is the specific value is added for the data pocket for which the EHC process is not performed, when the DRB ID corresponding to the first data pocket belongs to the first ID, the first data pocket includes the EHC header having the CID which is the non-specific value. When the DRB ID corresponding to the first data pocket does not belong to the first ID or the DRB ID corresponding to the first data pocket is the non-first ID, the first data pocket includes the EHC header having the CID which is the specific value.

For example, when the EHC configuration information indicates to only perform the EHC process for the DRB configured with the EHC process, the EHC processes are not performed for other DRBs. In this case, for the all data packets, the EHC process is only performed for the DRB configured with the EHC process, and the EHC process is not performed for the data pocket of the DRB not configured with the EHC process. Therefore, when the DRB corresponding to the first data packet is configured with the EHC process, the first packet is the data packet for which the EHC process has been performed. When the DRB corresponding to the first data packet is not configured with the EHC process, the first data packet is the data packet for which the EHC process is not performed.

In an embodiment, the UE1 PDCP may not add the EHC header for the data pocket of the DRB for which the EHC process is not performed. The UE1 PDCP adds the EHC header for the data pocket of the DRB for which the EHC process is performed.

In the case where the EHC header is added for the data pocket for which the EHC process is performed and the EHC header is not added for the data pocket for which the EHC process is not performed, when the DRB corresponding to the first data pocket is configured with the EHC process, the first data pocket includes the EHC header. When the DRB corresponding to the first data pocket is not configured with the EHC process, the first data pocket does not include the EHC header.

In another embodiment, the EHC headers are added for the all data pockets. For the data pocket of the DRB for which the EHC process is not performed, the UE1 PDCP is still required to add the header information to generate the EHC header including the CID which is the specific value. The added header information includes the packet type indication information and the CID, and the CID has the specific value, e.g., 0. For the data pocket of the DRB for which the EHC process is performed, the UE1 PDCP is required to add the header information to generate the EHC header including the CID which is the non-specific value. The added header information includes the packet type indication information and the CID, and the CID has the non-specific value, e.g., the non-zero value.

In the case where the EHC headers are added for all the data pockets, the CID in the EHC header of the data pocket for which the EHC process is performed is the non-specific value, and the CID in the EHC header of the data pocket for which the EHC process is not performed is the specific value, when the DRB corresponding to the first data pocket is configured with the EHC process, the first data pocket includes the EHC header having the CID which is the non-specific value. When the DRB corresponding to the first data pocket is not configured with the EHC process, the first data pocket includes the EHC header having the CID which is the specific value.

For example, the EHC configuration information indicates to only perform the EHC process for the DRB. In this case, when the bearer is the DRB, the EHC process is performed. When the bearer is not the DRB (e.g., the bearer is the SRB), the EHC process is not performed.

In an embodiment, the UE1 PDCP may not add the EHC header for the packet for which the EHC process is not performed, and add the EHC header for the packet for which the EHC process is performed. When the bearer of the first data pocket is the DRB, the first data pocket includes the EHC header. When the bearer is not the DRB, the pocket of the bearer does not include the EHC header.

In another embodiment, the EHC headers are added to the all pockets. For the pocket for which the EHC process is not performed, the UE1 PDCP is still required to add the header information to generate the EHC header including the CID which is the specific value. The added header information includes the packet type indication information and the CID, and the CID has the specific value, e.g., 0. For the pocket for which the EHC process is performed, the UE1 PDCP is required to add the header information to generate the EHC header including the CID which is the non-specific value, e.g., the non-zero value. When the bearer is the DRB, the first data pocket includes the EHC header including the CID which is the non-specific value. When the bearer is not the DRB, the pocket of the bearer includes the EHC header including the CID which is the specific value.

After performing the EHC process and generating the first data packet based on the EHC configuration information, the UE1 transmits the first data packet to the UE2. The UE2 is required to acquire the first data packet and determines the corresponding reception behavior based on the EHC configuration information. The reception behavior of the UE2 includes at least one of the high layer delivery, the data decompression or recovery, and the header detection.

For any first data packet, regardless of whether the first data packet includes the header, the corresponding reception behavior of the UE2 may include the high layer delivery. When the data pocket received by the UE2 includes the header, the corresponding reception behavior of the UE2 may include the header detection. When the first data pocket is the data pocket for which the EHC process has been performed and the pocket type indication information in the EHC header indicates that the first data pocket is the data pocket of the CH, the corresponding reception behavior of the UE2 may include the data decompression or recovery.

When the UE2 is informed based on the EHC configuration information that the UE1 PDCP does not add the EHC header for the data pocket of the DRB for which the EHC is not performed and the UE1 PDCP adda the EHC header for the data pocket of the DRB for which the EHC is performed, the UE2 determines the data pocket not including the EHC header to be the data pocket for which the EHC is not performed. After acquiring the data pocket, the UE2 directly performs the high layer delivery.

The UE2 determines that the data packet including the EHC header is the data packet for which the EHC process has been performed. After acquiring the data packet, the UE2 may perform the header detection and acquire the packet type indication information and the CID in the EHC header. When the packet type indication information indicates that the received data packet is the data packet of the CH, the UE2 may performs the data decompression or recovery based on the CID and the stored original header information corresponding to the CID. The UE2 may also perform the de-header process, deliver to the high layer, and transmit the EHC feedback pocket to the UE1.

Therefore, when the first data packet does not include the EHC header, the EHC reception process of the UE2 includes the high layer delivery. When the first data packet includes the EHC header, the EHC reception process of the UE2 includes at least one of the high layer delivery, the data decompression or recovery, and the header detection.

In the case, the UE2 is informed based on the EHC configuration information that the UE1 PDCP is still required to add the header information for the data pocket of the DRB for which the EHC is not performed. The header information includes the packet type indication information and the CID, and the CID has the specific value, e.g., 0. The UE1 PDCP adds the header information for the data pocket of the DRB for which the EHC is performed, the header information includes the packet type indication information and the CID, and the CID has the non-specific value, e.g., the non-zero value. The UE2 determines the data pocket of the EHC header including the CID which is the specific value to be the data pocket for which the EHC is not performed. After acquiring the data pocket, the UE2 may perform at least one of the header detection and the high layer delivery. The UE2 may remove the header information for the data pocket for which the EHC is not performed and deliver it to the high layer.

The UE2 determines that the data packet including the EHC header having the CID which is the non-specific value to be the data pocket for which the EHC process has been performed. After acquiring the data packet, the UE2 may perform the header detection and acquire the packet type indication information and the CID in the EHC header. When the packet type indication information indicates that the received data packet is the data packet of the CH, the UE2 may perform the data decompression or recovery based on the CID and the stored original header information corresponding to the CID. The UE2 may also save the CID and remove the header to deliver to the high layer. That is, the UE2 performs at least one of the header detection, the high layer delivery, and the data decompression or recovery. In an embodiment, the UE2 may also transmit the EHC feedback packet to the UE1.

Therefore, when the first data packet includes the EHC header having the CID which is the specific value, the EHC process of the UE2 includes at least one of the high layer delivery and the header detection. When the first data pocket includes the EHC header having the CID which is the non-specific value, the EHC process of the UE2 includes at least one of the high layer delivery, the data decompression or recovery, and the header detection.

According to the data transmission method provided in the embodiment of the present disclosure, the first terminal device firstly performs the EHC process based on the EHC configuration information to generate the first data packet, and then transmits the first data packet to the second terminal device. The second terminal device performs the EHC reception process for the first data packet based on the EHC configuration information to obtain the second data packet. Through the preset EHC configuration information, or the EHC configuration information configured by the network device, or the EHC configuration information configured by the terminal device, the EHC function between the terminal devices is achieved, and the resource utilization rate during the data transmission between the terminal devices is improved.

FIG. 14 is a structural schematic view one of a data transmission apparatus according to some embodiments of the present disclosure. As shown in FIG. 14, the data transmission apparatus 140 includes a processing module 141 and a transceiver module 142.

The processing module 141 is configured to perform an Ethernet Header Compression (EHC) process based on EHC configuration information and generating a first data packet.

The transceiver module 142 is configured to transmit the first data packet to a second terminal device.

In an embodiment, the EHC configuration information is any one of preset EHC configuration information; EHC configuration information configured by a network device; and EHC configuration information configured by a terminal device.

In an embodiment, the EHC configuration information includes at least one of a configuration including an EHC parameter; the EHC parameter; and a DRB configuration, configured to indicate whether a corresponding DRB is configured with an EHC process.

In an embodiment, the configuration including the EHC parameter includes at least one of a configuration of an EHC parameter of a transmitting resource pool; a configuration of an EHC parameter of a receiving resource pool; a configuration of an EHC parameter of a resource-shared pool; and a configuration of an EHC parameter between the first terminal device and the second terminal device.

In an embodiment, the configuration of the EHC parameter between the first terminal device and the second terminal device includes a terminal device ID, the terminal device ID is configured to indicate a matching relationship between the configuration of the EHC parameter between the first terminal device and the second terminal device and a terminal device.

In an embodiment, the EHC configuration information includes an EHC parameter, and the EHC parameter includes at least one of an EHC CID length; a maximum value of a transmission end EHC CID; a maximum value of a unidirectional EHC CID; and a continue EHC, configured to indicate whether to perform a reset process for the EHC parameter or an EHC status in response to a PDCP being reconstructed.

In an embodiment, the EHC configuration information includes a DRB configuration, and the DRB configuration includes at least one of a DRB ID; a DRB transmission type; and a dada-packet type corresponding to a DRB.

In an embodiment, he EHC configuration information is EHC configuration information configured by a network device, and the transceiver module 142 is further configured to receive a RRC message from the network device; and acquire the EHC configuration information based on the RRC message.

In an embodiment, the EHC configuration information is EHC configuration information configured by a network device, and the transceiver module 142 is further configured to receive the EHC configuration information from the second terminal device, wherein the EHC configuration information is transmitted by the network device to the second terminal device.

In an embodiment, the EHC configuration information includes any one of a configuration of an EHC parameter of a transmitting resource pool; and both the configuration of the EHC parameter of the transmitting resource pool and a configuration of an EHC parameter of a receiving resource pool.

In an embodiment, the EHC configuration information is EHC configuration information configured by a network device, and the transceiver module 142 is further configured to transmit the EHC configuration information to the second terminal device.

In an embodiment, the EHC configuration information includes any one of a configuration of an EHC parameter of a transmitting resource pool; a configuration of an EHC parameter of a receiving resource pool; and both the configuration of the EHC parameter of the transmitting resource pool and the configuration of the EHC parameter of the receiving resource pool.

In an embodiment, the EHC configuration information is EHC configuration information configured by the first terminal device, and the transceiver module 142 is further configured to transmit the EHC configuration information to the second terminal device; or
transmit the EHC configuration information to the second terminal device through a network device.

In an embodiment, the EHC configuration information is EHC configuration information configured by the second terminal device, and the transceiver module 142 is further configured to receive the EHC configuration information from the second terminal device; or
receive the EHC configuration information from a network device, wherein the EHC configuration information is transmitted by the second terminal device to the network device.

In an embodiment, the EHC configuration information includes a EHC parameter, and the EHC parameter includes at least one of a transmitting EHC parameter of the first terminal device; a receiving EHC parameter of the first terminal device; a transmitting EHC parameter of the second terminal device; and a receiving EHC parameter of the second terminal device.

In an embodiment, the DRB configuration including a DRB identification includes at least one of the DRB configuration indicating the EHC process to be performed for a DRB of a first ID in response to the DRB ID being the first ID; the DRB configuration indicating the EHC process not to be performed for a DRB not of the first ID in response to the DRB ID being not the first ID; the EHC process being performed for a DRB corresponding to the DRB ID carried in the DRB configuration; and the EHC process being not performed for a DRB corresponding to a DRB ID not carried in the DRB configuration not performing the EHC process.

In an embodiment, the DRB configuration including a DRB transmission type includes at least one of the DRB configuration indicating the EHC process to be performed for a DRB of a unicast type in response to the DRB transmission type being the unicast type; the DRB configuration indicating the EHC process not to be performed for a DRB of a non-unicast type in response to the DRB transmission type being the non-unicast type; the EHC process being performed for the DRB in response to the DRB transmission type being the unicast type; and the EHC process being not performed for the DRB in response to the DRB transmission type being the non-unicast type.

In an embodiment, the DRB configuration including a dada-packet type corresponding to a DRB includes at least one of the DRB configuration indicating the EHC process to be performed for a DRB of an ethernet-frame dada-packet type in response to the data-packet type being an ethernet frame; the DRB configuration indicating the EHC process not to be performed for a DRB of a non-ethernet frame dada-packet type in response to the dada-packet type being a non-ethernet frame; the EHC process being performed for the DRB in response to the dada-packet type being the ethernet frame; and the EHC process being not performed for the DRB in response to the dada-packet type being the non-ethernet frame.

In an embodiment, in response to any one of the EHC parameter not including an EHC CID length, the EHC parameter including a plurality kind of EHC CID lengths, and the EHC configuration information being preset EHC configuration information, the EHC CID length is determined through any one of a high layer indication; an ethernet-frame packet type; a preset rule; and a CID length of the corresponding DRB.

In an embodiment, the EHC configuration information indicating at least one of not to perform the EHC process; to perform the EHC process; to only perform the EHC process for a DRB having a DRB ID belonging to a first ID; to only perform the EHC process for a DRB configured with the EHC process; and to only perform the EHC process for a DRB.

In an embodiment, the EHC configuration information indicating not to perform the EHC process, includes any one of the first data packet not including an EHC header; and the first data packet including an EHC header having a specific value CID.

In an embodiment, the EHC configuration information indicating to perform the EHC process, includes any one of the first data packet including an EHC header; and the first data packet including an EHC header having a non-specific value CID.

In an embodiment, the EHC configuration information indicating to only perform the EHC process for a DRB having a DRB ID belonging to a first ID, includes any one of a DRB ID corresponding to the first data packet belonging to the first ID, and the first data packet including an EHC header; and the DRB ID not belonging to the first ID or the DRB ID being a non-first ID, and the first data packet not including the EHC header.

In an embodiment, the EHC configuration information indicating to only perform the EHC process for a DRB having a DRB ID belonging to a first ID, includes any one of a DRB ID corresponding to the first data packet belonging to the first ID, and the first data packet including an EHC header having a non-specific value CID; and the DRB ID not belonging to the first ID or the DRB ID being a non-first ID, and the first data packet including an EHC header having a specific-value CID.

In an embodiment, the EHC configuration information indicating to only perform the EHC process for a DRB configured with the EHC process, includes any one of a DRB corresponding to the first data packet being the DRB configured with the EHC process, and the first data pocket including an EHC header; and the DRB being a DRB not configured with the EHC process, and the first data packet not including the EHC header.

In an embodiment, the EHC configuration information indicating to only perform the EHC process for a DRB configured with the EHC process, includes any one of a DRB corresponding to the first data packet being the DRB configured with the EHC process, and the first data pocket including an EHC header having a non-specific value CID; and the DRB being a DRB not configured with the EHC process, and the first data packet including an EHC header having a specific value CID.

In an embodiment, the EHC configuration information indicating to only perform the EHC process for a DRB, includes any one of the first data pocket of a bearer including an EHC header in response to the bearer being the DRB; and a pocket of the bearer not including the EHC header in response to the bearer being not the DRB.

In an embodiment, the EHC configuration information indicating to only perform the EHC process for a DRB configured with the EHC process, includes any one of the first data pocket of a bearer including an EHC header having a non-specific value CID in response to the bearer being the DRB; and a pocket of the bearer including an EHC header having a specific value CID in response to the bearer being not the DRB.

In an embodiment, the transceiver module 142 is further configured to receive an EHC feedback packet from the second terminal device.

The data transmission apparatus provided in the embodiments of the present disclosure may perform the technical solution shown in the method embodiments described above, an implementation principle and a beneficial effect of which are similar to those in the method embodiments and not repeated herein.

FIG. 15 is a structural schematic view two of the data transmission apparatus according to some embodiments of the present disclosure. As shown in FIG. 15, the data transmission apparatus 150 includes a transceiver module 151 and a processing module 152.

The transceiver module 151 is configured to receive a first data packet from a first terminal device.

The processing module 152 is configured to perform an EHC reception process for the first data packet based on EHC configuration information and obtain a second data packet.

In an embodiment, the EHC configuration information is any one of:
preset EHC configuration information;
EHC configuration information configured by a network device; and
EHC configuration information configured by a terminal device.

In an embodiment, the EHC configuration information includes at least one of a configuration including an EHC parameter; the EHC parameter; and a DRB configuration, configured to indicate whether a corresponding DRB is configured with an EHC process.

In an embodiment, the configuration including the EHC parameter includes at least one of a configuration of an EHC parameter of a transmitting resource pool; a configuration of an EHC parameter of a receiving resource pool; a configuration of an EHC parameter of a resource-shared pool; and a configuration of an EHC parameter between the first terminal device and the second terminal device.

In an embodiment, the configuration of the EHC parameter between the first terminal device and the second terminal device includes a terminal device ID, the terminal device ID is configured to indicate a matching relationship between the configuration of the EHC parameter between the first terminal device and the second terminal device and a terminal device.

In an embodiment, the EHC configuration information includes an EHC parameter, and the EHC parameter includes at least one of an EHC CID length; a maximum value of a transmission end EHC CID; a maximum value of a unidirectional EHC CID; and a continue EHC, configured to indicate whether to perform a reset process for the EHC parameter or an EHC status in response to a PDCP being reconstructed.

In an embodiment, the EHC configuration information includes a DRB configuration, and the DRB configuration includes at least one of a DRB ID; a DRB transmission type; and a dada-packet type corresponding to a DRB.

In an embodiment, he EHC configuration information is EHC configuration information configured by a network device, and the transceiver module 151 is further configured to receive a RRC message from the network device; and acquire the EHC configuration information based on the RRC message.

In an embodiment, the EHC configuration information is EHC configuration information configured by a network device, and the transceiver module 151 is further configured to receive the EHC configuration information from the first terminal device, wherein the EHC configuration information is transmitted by the network device to the first terminal device.

In an embodiment, the EHC configuration information includes any one of a configuration of an EHC parameter of a transmitting resource pool; and both the configuration of the EHC parameter of the transmitting resource pool and a configuration of an EHC parameter of a receiving resource pool.

In an embodiment, the EHC configuration information is EHC configuration information configured by a network device, and the transceiver module 151 is further configured to transmit the EHC configuration information to the first terminal device.

In an embodiment, the EHC configuration information includes any one of a configuration of an EHC parameter of a transmitting resource pool; a configuration of an EHC parameter of a receiving resource pool; and both the configuration of the EHC parameter of the transmitting resource pool and the configuration of the EHC parameter of the receiving resource pool.

In an embodiment, the EHC configuration information is EHC configuration information configured by the second terminal device, and the transceiver module 151 is further configured to transmit the EHC configuration information to the first terminal device; or transmit the EHC configuration information to the first terminal device through a network device.

In an embodiment, the EHC configuration information is EHC configuration information configured by the second terminal device, and the transceiver module 151 is further configured to receive the EHC configuration information from the first terminal device; or receive the EHC configuration information from a network device, wherein the EHC configuration information is transmitted by the first terminal device to the network device.

In an embodiment, the EHC configuration information includes a EHC parameter, and the EHC parameter includes at least one of a transmitting EHC parameter of the first terminal device; a receiving EHC parameter of the first terminal device; a transmitting EHC parameter of the second terminal device; and a receiving EHC parameter of the second terminal device.

In an embodiment, the EHC reception process includes at least one of a high layer delivery; a data decompression or recovery; and a header detection.

In an embodiment, including any one of: the EHC reception process including the high layer delivery in response to the first data packet not including an EHC header; and the EHC reception process including the high layer delivery and at least one of the data decompression or recovery and the header detection in response to the first data packet including the EHC header.

In an embodiment, including any one of: the EHC reception process including the high layer delivery and the header detection in response to the first data packet including an EHC header having a specific value CID; and the EHC reception process including the high layer delivery and at least one of the data decompression or recovery and the header detection in response to the first data packet including an EHC header having a non-specific value CID.

In an embodiment, the first data packet is a data packet for which an EHC process has been performed, and the transceiver module 151 is further configured to transmit an EHC feedback packet to the first terminal device.

The data transmission apparatus provided in the embodiments of the present disclosure may perform the technical solution shown in the method embodiments described above, an implementation principle and a beneficial effect of which are similar to those in the method embodiments and not repeated herein.

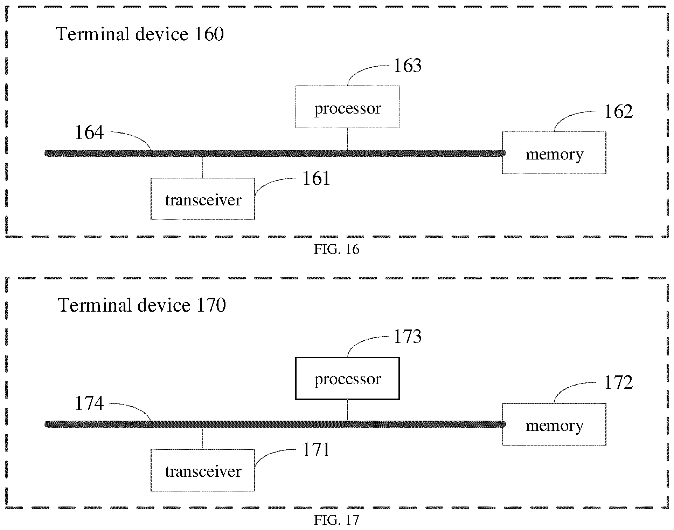

FIG. 16 is a structural schematic view one of the terminal device according to some embodiments of the present disclosure. As shown in FIG. 16, the terminal device 160 may include a transceiver 161, a memory 162, and a processor 163. The transceiver 161 may include a transmitter and/or a receiver. The transmitter may also be referred to as a transmitter, a transmitting machine, a transmitter port, a transmitter interface, or the like. The receiver may also be referred to as a receiver, a receiving machine, a receiver port, a receiver interface, or the like. Exemplarily, the transceiver 161, the memory 162, and the processor 163 are connected to each other through a bus 164.

The memory 162 is configured to store program instructions.

The processor 163 is configured to execute the program instructions stored in the memory to cause the terminal device 160 to perform any one of the data transmission methods described above.

The transmitter of the transceiver 161 may be configured to perform a transmitting function of the first terminal device in the data transmission method described above, and the receiver of the transceiver 161 may be configured to perform a receiving function of the first terminal device in the data transmission method described above.

FIG. 17 is a structural schematic diagram two of the terminal device according to some embodiments of the present disclosure. As shown in FIG. 17, the terminal device 160 may include a transceiver 171, a memory 172, and a processor 173. The transceiver 171 may include a transmitter and/or a receiver. The transmitter may also be referred to as a transmitter, a transmitting machine, a transmitter port, a transmitter interface, or the like. The receiver may also be referred to as a receiver, a receiving machine, a receiver port, a receiver interface, or the like. Exemplarily, the transceiver 171, the memory 172, and the processor 173 are connected to each other through a bus 174.

The memory 172 is configured to store program instructions.

The processor 173 is configured to execute the program instructions stored in the memory to cause the terminal device 170 to perform any one of the data transmission methods described above.

The transmitter of the transceiver 171 may be configured to perform a transmitting function of the second terminal device in the data transmission method described above, and the receiver of the transceiver 171 may be configured to perform a receiving function of the second terminal device in the data transmission method described above.

A computer-readable storage medium is further provided in the embodiments of the present disclosure. The computer-readable storage medium stores computer-executing instructions. When implemented by a processor, the computer-executing instructions are configured to cause the data transmission method described above.

A computer program product is further provided in the embodiments of the present disclosure. The computer program product may be executed by a processor. When the computer program is executed by the processor, any one of the data transmission methods performed by the terminal device or the network device described above is implemented.

The terminal device, the computer-readable storage medium, and the computer program product in the embodiments of the present disclosure may perform the data transmission method performed by the terminal device described above, a specific implementation process and a beneficial effect of which may refer to the above description and are not repeated herein.

In some embodiments provided in the present disclosure, it should be understood that disclosed systems, apparatuses, and methods, may be implemented in other manners. For example, the apparatus embodiments described above are merely exemplary. For example, a division of units described above is merely a logical function division, and other division manners are allowed in actual implementation. For example, multiple units or components may be combined or integrated into another system, or some features may be ignored or not executed. In addition, the mutual coupling or direct coupling or communication connection shown or discussed may be an indirect coupling or communication connection through some interfaces, apparatuses or units, and may be electrical or in other forms.

The units described above as separate components may or may not be physically separated, and the components illustrated as units may or may not be physical units. The units may be located in one place, or may be distributed to multiple network units. Some or all of the units may be selected according to actual needs to achieve the purpose of a solution of the embodiments. In addition, each functional unit in each embodiment of the present disclosure may be integrated into one processing unit, or each unit may exist physically separately. Optionally, two or more units may also be integrated into one unit. The above integrated unit can be implemented in the form of hardware or in the form of a software functional module.

Those skilled in the art may understand that all or a part of operations in each method embodiment may be completed through a hardware related to program instructions. The computer program described above may be stored in the computer-readable storage medium. When the computer program is executed by the processor, operations in each method embodiment mentioned above. The storage medium described above includes various media capable of storing program codes, such as a ROM, a RAM, a magnetic disk, an optical disk, and the like.

Finally, it should be noted that the above embodiments are only configured to illustrate the technical solution of the present disclosure and are not intended to be a limitation thereof. Although the present disclosure is described in detail with reference to the foregoing embodiments, a person of ordinary skill in the art should understand that they still can modify the technical solution depicted in each embodiment described above or equivalently substitute a part or all of features therein. Such modifications or substitutions do not take the nature of a corresponding technical solution out of the scope of the technical solution of the each embodiment of the present disclosure.

## Claims

1. A data transmission method, wherein the method is performed by a first terminal device and comprises:
performing an Ethernet Header Compression (EHC) process based on EHC configuration information and generating a first data packet; and
transmitting the first data packet to a second terminal device.

2. The data transmission method according to claim 1, wherein the EHC configuration information is any one of:
preset EHC configuration information;
EHC configuration information configured by a network device; and
EHC configuration information configured by a terminal device.

3. The data transmission method according to claim 1 or claim 2, wherein the EHC configuration information comprises at least one of:
a configuration comprising an EHC parameter;
the EHC parameter; and
a Data Radio Bearer (DRB) configuration, configured to indicate whether a corresponding DRB is configured with an EHC process.

4. The data transmission method according to claim 3, wherein the configuration comprises the EHC parameter comprises at least one of:
a configuration of an EHC parameter of a transmitting resource pool;
a configuration of an EHC parameter of a receiving resource pool;
a configuration of an EHC parameter of a resource-shared pool; and
a configuration of an EHC parameter between the first terminal device and the second terminal device.

5. The data transmission method according to claim 4, wherein the configuration of the EHC parameter between the first terminal device and the second terminal device comprises a terminal device identity (ID), the terminal device ID is configured to indicate a matching relationship between the configuration of the EHC parameter between the first terminal device and the second terminal device and a terminal device.

6. The data transmission method according to any one of claims 1-5, wherein the EHC configuration information comprises an EHC parameter, and the EHC parameter comprises at least one of:
an EHC Context ID (CID) length;
a maximum value of a transmission end EHC CID;
a maximum value of a unidirectional EHC CID; and
a continue EHC, configured to indicate whether to perform a reset process for the EHC parameter or an EHC status in response to a Packet Data Convergence Protocol (PDCP) being reconstructed.

7. The data transmission method according to any one of claims 1-5, wherein the EHC configuration information comprises a DRB configuration, and the DRB configuration comprises at least one of:
a DRB ID;
a DRB transmission type; and
a dada-packet type corresponding to a DRB.

8. The data transmission method according to any one of claims 1-7, wherein the EHC configuration information is EHC configuration information configured by a network device, and the method further comprises:
receiving a Radio Resource Control (RRC) message from the network device; and
acquiring the EHC configuration information based on the RRC message.

9. The data transmission method according to any one of claims 1-7, wherein the EHC configuration information is EHC configuration information configured by a network device, and the method further comprises:
receiving the EHC configuration information from the second terminal device, wherein the EHC configuration information is transmitted by the network device to the second terminal device.

10. The data transmission method according to claim 9, wherein the EHC configuration information comprises any one of:
a configuration of an EHC parameter of a transmitting resource pool; and
both the configuration of the EHC parameter of the transmitting resource pool and a configuration of an EHC parameter of a receiving resource pool.

11. The data transmission method according to any one of claims 1-7, wherein the EHC configuration information is EHC configuration information configured by a network device, and the method further comprises:
transmitting the EHC configuration information to the second terminal device.

12. The data transmission method according to claim 11, wherein the EHC configuration information comprises any one of:
a configuration of an EHC parameter of a transmitting resource pool;
a configuration of an EHC parameter of a receiving resource pool; and
both the configuration of the EHC parameter of the transmitting resource pool and the configuration of the EHC parameter of the receiving resource pool.

13. The data transmission method according to any one of claims 1-7, wherein the EHC configuration information is EHC configuration information configured by the first terminal device, and the method further comprises:
transmitting the EHC configuration information to the second terminal device; or
transmitting the EHC configuration information to the second terminal device through a network device.

14. The data transmission method according to any one of claims 1-7, wherein the EHC configuration information is EHC configuration information configured by the second terminal device, and the method further comprises:
receiving the EHC configuration information from the second terminal device; or
receiving the EHC configuration information from a network device, wherein the EHC configuration information is transmitted by the second terminal device to the network device.

15. The data transmission method according to claim 13 or 14, wherein the EHC configuration information comprises a EHC parameter, and the EHC parameter comprises at least one of:
a transmitting EHC parameter of the first terminal device;
a receiving EHC parameter of the first terminal device;
a transmitting EHC parameter of the second terminal device; and
a receiving EHC parameter of the second terminal device.

16. The data transmission method according to any one of claims 3-5, wherein the DRB configuration comprises a DRB ID, and the method comprises at least one of:
the DRB configuration indicating the EHC process to be performed for a DRB of a first ID in response to the DRB ID being the first ID;
the DRB configuration indicating the EHC process not to be performed for a DRB not of the first ID in response to the DRB ID being not the first ID;
the EHC process being performed for a DRB corresponding to the DRB ID carried in the DRB configuration; and
the EHC process being not performed for a DRB corresponding to a DRB ID not carried in the DRB configuration.

17. The data transmission method according to any one of claims 3-5, wherein the DRB configuration comprises a DRB transmission type, and the method comprises at least one of:
the DRB configuration indicating the EHC process to be performed for a DRB of a unicast type in response to the DRB transmission type being the unicast type;
the DRB configuration indicating the EHC process not to be performed for a DRB of a non-unicast type in response to the DRB transmission type being the non-unicast type;
the EHC process being performed for the DRB in response to the DRB transmission type being the unicast type; and
the EHC process being not performed for the DRB in response to the DRB transmission type being the non-unicast type.

18. The data transmission method according to any one of claims 3-5, wherein the DRB configuration comprises a dada-packet type corresponding to a DRB, and the method comprises at least one of:
the DRB configuration indicating the EHC process to be performed for a DRB of an ethernet-frame dada-packet type in response to the data-packet type being an ethernet frame;
the DRB configuration indicating the EHC process not to be performed for a DRB of a non-ethernet frame dada-packet type in response to the dada-packet type being a non-ethernet frame;
the EHC process being performed for the DRB in response to the dada-packet type being the ethernet frame; and
the EHC process being not performed for the DRB in response to the dada-packet type being the non-ethernet frame.

19. The data transmission method according to any one of claims 3-5, wherein in response to any one of the EHC parameter not comprising an EHC CID length, the EHC parameter comprising a plurality kind of EHC CID lengths, and the EHC configuration information being preset EHC configuration information, the EHC CID length is determined through any one of:
a high layer indication;
an ethernet-frame packet type;
a preset rule; and
a CID length of the corresponding DRB.

20. The data transmission method according to any one of claims 1-19, wherein the EHC configuration information indicating at least one of:
not to perform the EHC process;
to perform the EHC process;
to only perform the EHC process for a DRB having a DRB ID belonging to a first ID;
to only perform the EHC process for a DRB configured with the EHC process; and
to only perform the EHC process for a DRB.

21. The data transmission method according to claim 20, wherein in response to the EHC configuration information indicating not to perform the EHC process, the method satisfies any one of:
the first data packet not comprising an EHC header; and
the first data packet comprising an EHC header having a specific value CID.

22. The data transmission method according to claim 20, wherein in response to the EHC configuration information indicating to perform the EHC process, the method satisfies any one of:
the first data packet comprising an EHC header; and
the first data packet comprising an EHC header having a non-specific value CID.

23. The data transmission method according to claim 20, wherein in response to the EHC configuration information indicating to only perform the EHC process for a DRB having a DRB ID being a first ID, the method satisfies any one of:
a DRB ID corresponding to the first data packet belonging to the first ID, and the first data packet comprising an EHC header; and
the DRB ID not belonging to the first ID or the DRB ID being a non-first ID, the first data packet not comprising the EHC header.

24. The data transmission method according to claim 20, wherein the EHC configuration information indicating to only perform the EHC process for a DRB having a DRB ID belonging to a first ID, comprises any one of:
a DRB ID corresponding to the first data packet belonging to the first ID, and the first data packet comprising an EHC header having a non-specific value CID; and
the DRB ID not belonging to the first ID or the DRB ID being a non-first ID, and the first data packet comprising an EHC header having a specific-value CID.

25. The data transmission method according to claim 20, wherein in response to the EHC configuration information indicating to only perform the EHC process for a DRB configured with the EHC process, the method satisfies any one of:
a DRB corresponding to the first data packet being the DRB configured with the EHC process, and the first data pocket comprising an EHC header; and
the DRB being a DRB not configured with the EHC process, and the first data packet not comprising the EHC header.

26. The data transmission method according to claim 20, wherein the EHC configuration information indicating to only perform the EHC process for a DRB configured with the EHC process, comprises any one of:
a DRB corresponding to the first data packet being the DRB configured with the EHC process, and the first data pocket comprising an EHC header having a non-specific value CID; and
the DRB being a DRB not configured with the EHC process, and the first data packet comprising an EHC header having a specific value CID.

27. The data transmission method according to claim 20, wherein the EHC configuration information indicating to only perform the EHC process for a DRB, comprises any one of:
the first data pocket of a bearer comprising an EHC header in response to the bearer being the DRB; and
a pocket of the bearer not comprising the EHC header in response to the bearer being not the DRB.

28. The data transmission method according to claim 20, wherein the EHC configuration information indicating to only perform the EHC process for a DRB configured with the EHC process, comprises any one of:
the first data pocket of a bearer comprising an EHC header having a non-specific value CID in response to the bearer being the DRB; and
a pocket of the bearer comprising an EHC header having a specific value CID in response to the bearer being not the DRB.

29. The data transmission method according to any one of claims 20-28, wherein the method further comprises:
receiving an EHC feedback packet from the second terminal device.

30. A data transmission method, wherein the method is performed by a second terminal device and comprises:
receiving a first data packet from a first terminal device; and
performing an EHC reception process for the first data packet based on EHC configuration information and obtaining a second data packet.

31. The data transmission method according to claim 30, wherein the EHC configuration information is any one of:
preset EHC configuration information;
EHC configuration information configured by a network device; and
EHC configuration information configured by a terminal device.

32. The data transmission method according to claim 30 or 31, wherein the EHC configuration information comprises at least one of:
a configuration comprising an EHC parameter;
the EHC parameter; and
a DRB configuration, configured to indicate whether a corresponding DRB is configured with an EHC process.

33. The data transmission method according to claim 32, wherein the configuration comprises the EHC parameter comprises at least one of:
a configuration of an EHC parameter of a transmitting resource pool;
a configuration of an EHC parameter of a receiving resource pool;
a configuration of an EHC parameter of a resource-shared pool; and
a configuration of an EHC parameter between the first terminal device and the second terminal device.

34. The data transmission method according to claim 33, wherein the configuration of the EHC parameter between the first terminal device and the second terminal device comprises a terminal device ID, and the terminal device ID is configured to indicate a matching relationship between the configuration of the EHC parameter between the first terminal device and the second terminal device and a terminal device.

35. The data transmission method according to any one of claims 30-34, wherein the EHC configuration information comprises an EHC parameter, and the EHC parameter comprises at least one of:
an EHC CID length;
a maximum value of a transmission end EHC CID;
a maximum value of a unidirectional EHC CID; and
a continue EHC, configured to indicate whether to perform a reset process for the EHC parameter or an EHC status in response to a PDCP being reconstructed.

36. The data transmission method according to any one of claims 30-34, wherein the EHC configuration information comprises a DRB configuration, and the DRB configuration comprises at least one of:
a DRB ID;
a DRB transmission type; and
a dada-packet type corresponding to a DRB.

37. The data transmission method according to any one of claims 30-36, wherein the EHC configuration information is EHC configuration information configured by a network device, and the method further comprises:
receiving a RRC message from the network device; and
acquiring the EHC configuration information based on the RRC message.

38. The data transmission method according to any one of claims 30-36, wherein the EHC configuration information is EHC configuration information configured by a network device, and the method further comprises:
receiving the EHC configuration information from the first terminal device, wherein the EHC configuration information is transmitted by the network device to the first terminal device.

39. The data transmission method according to claim 38, wherein the EHC configuration information comprises any one of:
a configuration of an EHC parameter of a receiving resource pool; and
both a configuration of an EHC parameter of a transmitting resource pool and the configuration of the EHC parameter of the receiving resource pool.

40. The data transmission method according to any one of claims 30-36, wherein the EHC configuration information is EHC configuration information configured by a network device, and the method further comprises:
transmitting the EHC configuration information to the first terminal device.

41. The data transmission method according to claim 40, wherein the EHC configuration information comprises any one of:
a configuration of an EHC parameter of a transmitting resource pool;
a configuration of an EHC parameter of a receiving resource pool; and
both the configuration of the EHC parameter of the transmitting resource pool and the configuration of the EHC parameter of the receiving resource pool.

42. The data transmission method according to any one of claims 30-36, wherein the EHC configuration information is EHC configuration information configured by the second terminal device, and the method further comprises:
transmitting the EHC configuration information to the first terminal device; or
transmitting the EHC configuration information to the first terminal device through a network device.

43. The data transmission method according to any one of claims 30-36, wherein the EHC configuration information is EHC configuration information configured by the first terminal device, and the method further comprises:
receiving the EHC configuration information from the first terminal device; or
receiving the EHC configuration information from a network device, wherein the EHC configuration information is transmitted by the first terminal device to the network device.

44. The data transmission method according to claim 42 or 43, wherein the EHC configuration information comprises a EHC parameter, and the EHC parameter comprises at least one of:
a transmitting EHC parameter of the first terminal device;
a receiving EHC parameter of the first terminal device;
a transmitting EHC parameter of the second terminal device; and
a receiving EHC parameter of the second terminal device.

45. The data transmission method according to any one of claims 30-44, wherein the EHC reception process comprises at least one of:
a high layer delivery;
a data decompression or recovery; and
a header detection.

46. The data transmission method according to claim 45, comprising any one of:
the EHC reception process comprising the high layer delivery in response to the first data packet not comprising an EHC header; and
the EHC reception process comprising the high layer delivery and at least one of the data decompression or recovery and the header detection in response to the first data packet comprising the EHC header.

47. The data transmission method according to claim 45, comprising any one of:
the EHC reception process comprising the high layer delivery and the header detection in response to the first data packet comprising an EHC header having a specific value CID; and
the EHC reception process comprising the high layer delivery and at least one of the data decompression or recovery and the header detection in response to the first data packet comprising an EHC header having a non-specific value CID.

48. The data transmission method according to any one of claims 45-47, wherein the first data packet is a data packet for which an EHC process has been performed, and the method further comprises:
transmitting an EHC feedback packet to the first terminal device.

49. A data transmission apparatus, comprising:
a processing module, configured to perform an Ethernet Header Compression (EHC) process based on EHC configuration information and generating a first data packet; and
a transceiver module, configured to transmit the first data packet to a second terminal device.

50. The data transmission apparatus according to claim 49, wherein the EHC configuration information is any one of:
preset EHC configuration information;
EHC configuration information configured by a network device; and
EHC configuration information configured by a terminal device.

51. The data transmission apparatus according to claim 49 or 50, wherein the EHC configuration information comprises at least one of:
a configuration comprising an EHC parameter;
the EHC parameter; and
a DRB configuration, configured to indicate whether a corresponding DRB is configured with an EHC process.

52. The data transmission apparatus according to claim 51, wherein the configuration comprises the EHC parameter comprises at least one of:
a configuration of an EHC parameter of a transmitting resource pool;
a configuration of an EHC parameter of a receiving resource pool;
a configuration of an EHC parameter of a resource-shared pool; and
a configuration of an EHC parameter between the first terminal device and the second terminal device.

53. The data transmission apparatus according to claim 52, wherein the configuration of the EHC parameter between the first terminal device and the second terminal device comprises a terminal device ID, the terminal device ID is configured to indicate a matching relationship between the configuration of the EHC parameter between the first terminal device and the second terminal device and a terminal device.

54. The data transmission apparatus according to any one of claims 49-53, wherein the EHC configuration information comprises an EHC parameter, and the EHC parameter comprises at least one of:
an EHC CID length;
a maximum value of a transmission end EHC CID;
a maximum value of a unidirectional EHC CID; and
a continue EHC, configured to indicate whether to perform a reset process for the EHC parameter or an EHC status in response to a PDCP being reconstructed.

55. The data transmission apparatus according to any one of claims 49-53, wherein the EHC configuration information comprises a DRB configuration, and the DRB configuration comprises at least one of:
a DRB ID;
a DRB transmission type; and
a dada-packet type corresponding to a DRB.

56. The data transmission apparatus according to any one of claims 49-55, wherein the EHC configuration information is EHC configuration information configured by a network device, and the transceiver module is further configured to:
receive a RRC message from the network device; and
acquire the EHC configuration information based on the RRC message.

57. The data transmission apparatus according to any one of claims 49-55, wherein the EHC configuration information is EHC configuration information configured by a network device, and the transceiver module is further configured to:
receive the EHC configuration information from the second terminal device, wherein the EHC configuration information is transmitted by the network device to the second terminal device.

58. The data transmission apparatus according to claim 57, wherein the EHC configuration information comprises any one of:
a configuration of an EHC parameter of a transmitting resource pool; and
both the configuration of the EHC parameter of the transmitting resource pool and a configuration of an EHC parameter of a receiving resource pool.

59. The data transmission apparatus according to any one of claims 49-55, wherein the EHC configuration information is EHC configuration information configured by a network device, and the transceiver module is further configured to:
transmit the EHC configuration information to the second terminal device.

60. The data transmission apparatus according to claim 59, wherein the EHC configuration information comprises any one of:
a configuration of an EHC parameter of a transmitting resource pool;
a configuration of an EHC parameter of a receiving resource pool; and
both the configuration of the EHC parameter of the transmitting resource pool and the configuration of the EHC parameter of the receiving resource pool.

61. The data transmission apparatus according to any one of claims 49-55, wherein the EHC configuration information is EHC configuration information configured by the first terminal device, and the transceiver module is further configured to:
transmit the EHC configuration information to the second terminal device; or
transmit the EHC configuration information to the second terminal device through a network device.

62. The data transmission apparatus according to any one of claims 49-55, wherein the EHC configuration information is EHC configuration information configured by the second terminal device, and the transceiver module is further configured to:
receive the EHC configuration information from the second terminal device; or
receive the EHC configuration information from a network device, wherein the EHC configuration information is transmitted by the second terminal device to the network device.

63. The data transmission apparatus according to claim 61 or 62, wherein the EHC configuration information comprises a EHC parameter, and the EHC parameter comprises at least one of:
a transmitting EHC parameter of the first terminal device;
a receiving EHC parameter of the first terminal device;
a transmitting EHC parameter of the second terminal device; and
a receiving EHC parameter of the second terminal device.

64. The data transmission apparatus according to any one of claims 51-53, wherein the DRB configuration comprises a DRB ID, the processing module is configured to perform at least one of:
the DRB configuration indicating the EHC process to be performed for a DRB of a first ID in response to the DRB ID being the first ID;
the DRB configuration indicating the EHC process not to be performed for a DRB not of the first ID in response to the DRB ID being not the first ID;
the EHC process being performed for a DRB corresponding to the DRB ID carried in the DRB configuration; and
the EHC process being not performed for a DRB corresponding to a DRB ID not carried in the DRB configuration not performing the EHC process.

65. The data transmission apparatus according to any one of claims 51-53, wherein the DRB configuration comprises a DRB transmission type, the processing module is configured to perform at least one of:
the DRB configuration indicating the EHC process to be performed for a DRB of a unicast type in response to the DRB transmission type being the unicast type;
the DRB configuration indicating the EHC process not to be performed for a DRB of a non-unicast type in response to the DRB transmission type being the non-unicast type;
the EHC process being performed for the DRB in response to the DRB transmission type being the unicast type; and
the EHC process being not performed for the DRB in response to the DRB transmission type being the non-unicast type.

66. The data transmission apparatus according to any one of claims 51-53, wherein the DRB configuration comprises a dada-packet type corresponding to a DRB, the processing module is configured to perform at least one of:
the DRB configuration indicating the EHC process to be performed for a DRB of an ethernet-frame dada-packet type in response to the data-packet type being an ethernet frame;
the DRB configuration indicating the EHC process not to be performed for a DRB of a non-ethernet frame dada-packet type in response to the dada-packet type being a non-ethernet frame;
the EHC process being performed for the DRB in response to the dada-packet type being the ethernet frame; and
the EHC process being not performed for the DRB in response to the dada-packet type being the non-ethernet frame.

67. The data transmission apparatus according to any one of claims 51-53, wherein in response to any one of the EHC parameter not comprising an EHC CID length, the EHC parameter comprising a plurality kind of EHC CID lengths, and the EHC configuration information being preset EHC configuration information, the EHC CID length is determined through any one of:
a high layer indication;
an ethernet-frame packet type;
a preset rule; and
a CID length of the corresponding DRB.

68. The data transmission apparatus according to any one of claims 49-67, wherein the EHC configuration information indicating at least one of:
not to perform the EHC process;
to perform the EHC process;
to only perform the EHC process for a DRB having a DRB ID belonging to a first ID;
to only perform the EHC process for a DRB configured with the EHC process; and
to only perform the EHC process for a DRB.

69. The data transmission apparatus according to claim 68, wherein the EHC configuration information indicating not to perform the EHC process, comprises any one of:
the first data packet not comprising an EHC header; and
the first data packet comprising an EHC header having a specific value CID.

70. The data transmission apparatus according to claim 68, wherein the EHC configuration information indicating to perform the EHC process, comprises any one of:
the first data packet comprising an EHC header; and
the first data packet comprising an EHC header having a non-specific value CID.

71. The data transmission apparatus according to claim 68, wherein the EHC configuration information indicating to only perform the EHC process for a DRB having a DRB ID belonging to a first ID, comprises any one of:
a DRB ID corresponding to the first data packet belonging to the first ID, and the first data packet comprising an EHC header; and
the DRB ID not belonging to the first ID or the DRB ID being a non-first ID, and the first data packet not comprising the EHC header.

72. The data transmission apparatus according to claim 68, wherein the EHC configuration information indicating to only perform the EHC process for a DRB having a DRB ID belonging to a first ID, comprises any one of:
a DRB ID corresponding to the first data packet belonging to the first ID, and the first data packet comprising an EHC header having a non-specific value CID; and
the DRB ID not belonging to the first ID or the DRB ID being a non-first ID, and the first data packet comprising an EHC header having a specific-value CID.

73. The data transmission apparatus according to claim 68, wherein the EHC configuration information indicating to only perform the EHC process for a DRB configured with the EHC process, comprises any one of:
a DRB corresponding to the first data packet being the DRB configured with the EHC process, and the first data pocket comprising an EHC header; and
the DRB being a DRB not configured with the EHC process, and the first data packet not comprising the EHC header.

74. The data transmission apparatus according to claim 68, wherein the EHC configuration information indicating to only perform the EHC process for a DRB configured with the EHC process, comprises any one of:
a DRB corresponding to the first data packet being the DRB configured with the EHC process, and the first data pocket comprising an EHC header having a non-specific value CID; and
the DRB being a DRB not configured with the EHC process, and the first data packet comprising an EHC header having a specific value CID.

75. The data transmission apparatus according to claim 68, wherein the EHC configuration information indicating to only perform the EHC process for a DRB, comprises any one of:
the first data pocket of a bearer comprising an EHC header in response to the bearer being the DRB; and
a pocket of the bearer not comprising the EHC header in response to the bearer being not the DRB.

76. The data transmission apparatus according to claim 68, wherein the EHC configuration information indicating to only perform the EHC process for a DRB configured with the EHC process, comprises any one of:
the first data pocket of a bearer comprising an EHC header having a non-specific value CID in response to the bearer being the DRB; and
a pocket of the bearer comprising an EHC header having a specific value CID in response to the bearer being not the DRB.

77. The data transmission apparatus according to any one of claims 68-76, wherein the transceiver module is further configured to:
receive an EHC feedback packet from the second terminal device.

78. A data transmission apparatus, comprising:
a transceiver module, configured to receive a first data packet from a first terminal device; and
a processing module, configured to perform an EHC reception process for the first data packet based on EHC configuration information and obtain a second data packet.

79. The data transmission apparatus according to claim 78, wherein the EHC configuration information is any one of:
preset EHC configuration information;
EHC configuration information configured by a network device; and
EHC configuration information configured by a terminal device.

80. The data transmission apparatus according to claim 78 or 79, wherein the EHC configuration information comprises at least one of:
a configuration comprising an EHC parameter;
the EHC parameter; and
a DRB configuration, configured to indicate whether a corresponding DRB is configured with an EHC process.

81. The data transmission apparatus according to claim 80, wherein the configuration comprises the EHC parameter comprises at least one of:
a configuration of an EHC parameter of a transmitting resource pool;
a configuration of an EHC parameter of a receiving resource pool;
a configuration of an EHC parameter of a resource-shared pool; and
a configuration of an EHC parameter between the first terminal device and the second terminal device.

82. The data transmission apparatus according to claim 81, wherein the configuration of the EHC parameter between the first terminal device and the second terminal device comprises a terminal device ID, and the terminal device ID is configured to indicate a matching relationship between the configuration of the EHC parameter between the first terminal device and the second terminal device and a terminal device.

83. The data transmission apparatus according to any one of claims 78-82, wherein the EHC configuration information comprises an EHC parameter, and the EHC parameter comprises at least one of:
an EHC CID length;
a maximum value of a transmission end EHC CID;
a maximum value of a unidirectional EHC CID; and
a continue EHC, configured to indicate whether to perform a reset process for the EHC parameter or an EHC status in response to a PDCP being reconstructed.

84. The data transmission apparatus according to any one of claims 78-82, wherein the EHC configuration information comprises a DRB configuration, and the DRB configuration comprises at least one of:
a DRB ID;
a DRB transmission type; and
a dada-packet type corresponding to a DRB.

85. The data transmission apparatus according to any one of claims 78-84, wherein the EHC configuration information is EHC configuration information configured by a network device, and the transceiver module is further configured to:
receive a RRC message from the network device; and
acquire the EHC configuration information based on the RRC message.

86. The data transmission apparatus according to any one of claims 78-84, wherein the EHC configuration information is EHC configuration information configured by a network device, and the transceiver module is further configured to:
receive the EHC configuration information from the first terminal device, wherein the EHC configuration information is transmitted by the network device to the first terminal device.

87. The data transmission apparatus according to claim 86, wherein the EHC configuration information comprises any one of:
a configuration of an EHC parameter of a receiving resource pool; and
both a configuration of an EHC parameter of a transmitting resource pool and the configuration of the EHC parameter of the receiving resource pool.

88. The data transmission apparatus according to any one of claims 78-84, wherein the EHC configuration information is EHC configuration information configured by a network device, and the transceiver module is further configured to:
transmit the EHC configuration information to the first terminal device.

89. The data transmission apparatus according to claim 88, wherein the EHC configuration information comprises any one of:
a configuration of an EHC parameter of a transmitting resource pool;
a configuration of an EHC parameter of a receiving resource pool; and
both the configuration of the EHC parameter of the transmitting resource pool and the configuration of the EHC parameter of the receiving resource pool.

90. The data transmission apparatus according to any one of claims 78-84, wherein the EHC configuration information is EHC configuration information configured by the second terminal device, and the transceiver module is further configured to:
transmit the EHC configuration information to the first terminal device; or
transmit the EHC configuration information to the first terminal device through a network device.

91. The data transmission apparatus according to any one of claims 78-84, wherein the EHC configuration information is EHC configuration information configured by the first terminal device, and the transceiver module is further configured to:
receive the EHC configuration information from the first terminal device; or
receive the EHC configuration information from a network device, wherein the EHC configuration information is transmitted by the first terminal device to the network device.

92. The data transmission apparatus according to claim 90 or 91, wherein the EHC configuration information comprises a EHC parameter, and the EHC parameter comprises at least one of:
a transmitting EHC parameter of the first terminal device;
a receiving EHC parameter of the first terminal device;
a transmitting EHC parameter of the second terminal device; and
a receiving EHC parameter of the second terminal device.

93. The data transmission apparatus according to any one of claims 78-92, wherein the EHC reception process comprises at least one of:
a high layer delivery;
a data decompression or recovery; and
a header detection.

94. The data transmission apparatus according to claim 93, wherein comprises any one of:
the EHC reception process comprising the high layer delivery in response to the first data packet not comprising an EHC header; and
the EHC reception process comprising the high layer delivery and at least one of the data decompression or recovery and the header detection in response to the first data packet comprising the EHC header.

95. The data transmission apparatus according to claim 93, wherein comprising any one of:
the EHC reception process comprising the high layer delivery and the header detection in response to the first data packet comprising an EHC header having a specific value CID; and
the EHC reception process comprising the high layer delivery and at least one of the data decompression or recovery and the header detection in response to the first data packet comprising an EHC header having a non-specific value CID.

96. The data transmission apparatus according to any one of claims 93-95, wherein the first data packet is a data packet for which an EHC process has been performed, and the transceiver module is further configured to:
transmit an EHC feedback packet to the first terminal device.

97. A terminal device, comprising:
a transceiver;
a memory, configured to store computer-executing instructions; and
a processor, configured to perform the computer-executing instructions stored in the memory to implement the data transmission method according to any one of claims 1 to 29.

98. A terminal device, comprising:
a transceiver;
a memory, configured to store computer-executing instructions;
a processor, configured to perform the computer-executing instructions stored in the memory to implement the data transmission method according to any one of claims 30 to 48.

99. A computer-readable storage medium, storing computer-executing instructions, wherein when implemented by a processor, the computer-executing instructions are configured to cause the data transmission method according to any one of claims 1 to 29 or the data transmission method according to any one of claims 30 to 48 to be implemented.

100. A computer program product, comprising a computer program, wherein when the computer program is executed by a processor, the data transmission method according to any one of claims 1 to 29 or the data transmission method according to any one of claims 30 to 48 is implemented.
